# EUROPÄISCHE PATENTANMELDUNG

(11) **EP 4 375 008 A1**
(43) Veröffentlichungstag der Anmeldung: **29.05.2024**
(21) Anmeldenummer: 22209821.2
(22) Anmeldetag: 28.11.2022
(51) Int. Cl.: B23Q 7/04

(54) **BEARBEITUNGSZENTRUM**

(71) Anmelder: AFW Holding GmbH, 4656 Kirchham (AT)
(72) Erfinder: Weingärtner, Dominik, 4643 Pettenbach (AT)
(74) Vertreter: Hafner & Kohl PartmbB

(57) **Zusammenfassung**

Bearbeitungszentrum (10) zur spanenden Bearbeitung eines Werkstücks (20), umfassend eine in einem Bearbeitungsraum (11) des Bearbeitungszentrums (10) angeordnete Bearbeitungseinheit (15), welche ein Bearbeitungswerkzeug (16) zur spanenden Bearbeitung eines Werkstücks (20) relativ zu einer Bearbeitungsachse (BA1) umfasst, wobei das Bearbeitungszentrum (10) umfasst:
ein Transportfahrzeug (30) mit einer Aufnahmeeinrichtung (40) zur Aufnahme wenigstens zweier Werkstücke (20), wobei
das Transportfahrzeug (30) in einem translatorischen Bewegungsfreiheitsgrad zumindest zwischen einer ersten Position innerhalb des Bearbeitungszentrums (10), insbesondere innerhalb des Bearbeitungsraums (11), und einer zweiten Position außerhalb des Bearbeitungszentrums (10) bewegbar gelagert ist, und wobei
das Transportfahrzeug (30) und/oder die Aufnahmeeinrichtung (40) in einem rotatorischen Bewegungsfreiheitsgrad bewegbar gelagert ist.

## Beschreibung

Die Erfindung betrifft ein Bearbeitungszentrum zur spanenden Bearbeitung eines Werkstücks, wobei das Bearbeitungszentrum eine in einem Bearbeitungsraum angeordnete Bearbeitungseinheit umfasst, welche ein Bearbeitungswerkzeug zur spanenden Bearbeitung eines Werkstücks umfasst.

Entsprechende Bearbeitungszentren zur spanenden Bearbeitung eines Werkstücks sind aus dem Stand der Technik dem Grunde nach bekannt und können z. B. als Dreh- und/oder Fräszentren ausgebildet sein und demnach z. B. eine Dreh- und/oder Fräsbearbeitung eines Werkstücks ermöglichen.

Im Hinblick auf einen effizienten Herstellungsvorgang eines spanend bearbeiteten Werkstücks ist ein möglichst schneller Transport eines spanend zu bearbeitenden Werkstücks in den Bearbeitungsraum eines jeweiligen Bearbeitungszentrums respektive ein möglichst schneller Transport eines spanend bearbeiteten Werkstücks aus dem Bearbeitungsraum eines jeweiligen Bearbeitungszentrum von Bedeutung.

Im Stand der Technik wurden bereits Lösungen vorgeschlagen, ein spanend zu bearbeitendes Werkstück über Transporteinheiten in den Bearbeitungsraum eines jeweiligen Bearbeitungszentrums zu befördern respektive ein spanend bearbeitetes Werkstück aus dem Bearbeitungsraums eines jeweiligen Bearbeitungszentrums zu befördern.

Die aus dem Stand der Technik bekannten Lösungen sind jedoch im Hinblick auf Aspekte wie Effizienz, Praktikabilität und Zuverlässigkeit verbesserungs- bzw. weiterentwicklungsbedürftig.

Hiervon ausgehend liegt der vorliegenden Erfindung die Aufgabe zugrunde, ein verbessertes Bearbeitungszentrum zur spanenden Bearbeitung eines Werkstücks anzugeben.

Die Aufgabe wird durch ein Bearbeitungszentrum zur spanenden Bearbeitung eines Werkstücks gemäß dem unabhängigen Anspruch 1 gelöst. Die hierzu abhängigen Ansprüche betreffen mögliche Ausführungsformen des Bearbeitungszentrums.

Ein erster Aspekt der Erfindung betrifft ein Bearbeitungszentrum zur spanenden Bearbeitung eines Werkstücks. Das Bearbeitungszentrum ist sonach zur spanenden Bearbeitung eines Werkstücks eingerichtet. Unter einer spanenden Bearbeitung eines Werkstücks kann insbesondere eine Bohrbearbeitung und/oder eine Drehbearbeitung und/oder eine Fräsbearbeitung eines Werkstücks verstanden werden. Das Bearbeitungszentrum kann sonach als ein Bohrzentrum, ein Drehzentrum oder ein Fräszentrum oder ein kombiniertes Bohr- und/oder Dreh- und/oder Fräszentrum ausgebildet sein oder ein solches umfassen.

Bei dem bzw. einem vermittels des Bearbeitungszentrums spanend bearbeitbaren Werkstück handelt es sich typischerweise um ein metallisches Werkstück. Bei einem metallischen Werkstück kann es sich z. B. um ein Werkstück aus einem auf Eisen-basierenden metallischen Werkstoff handeln. Das bzw. ein vermittels des Bearbeitungszentrums spanend bearbeitbares Werkstück kann eine rotationssymmetrische Form bzw. Grundform aufweisen. Das Werkstück kann sonach z. B. zumindest abschnittsweise, gegebenenfalls vollständig, scheibenförmig, ringscheibenförmig, zylinderförmig oder hohlzylinderförmig sein.

Das Bearbeitungszentrum umfasst einen Bearbeitungsraum, in welchem die spanende Bearbeitung des Werkstücks erfolgt. Der gegebenenfalls auch als Bearbeitungskammer bezeichenbare Bearbeitungsraum beinhaltet typischerweise auch ein Maschinenbett bzw. Maschinengestell des Bearbeitungszentrums.

Der Bearbeitungsraum kann durch eine Gehäusestruktur des Bearbeitungszentrums begrenzt bzw. definiert sein. Die Gehäusestruktur kann durch ein oder mehrere Gehäusestrukturelemente gebildet sein bzw. umfassen. Die Gehäusestrukturelemente können Wandungen bilden, welche den Bearbeitungsraum begrenzen. Wenigstens ein Gehäusestrukturelement kann in einem Bewegungsfreiheitsgrad, d. h. z. B. in einem Schiebe- und/oder Schwenkbewegungsfreiheitsgrad, relativ zu wenigstens einem anderen Gehäusestrukturelement bewegbar gelagert sein, um in wenigstens eine Offenstellung bewegt zu werden, in welcher eine Zugangsmöglichkeit in den Bearbeitungsraum geschaffen ist, und/oder um in wenigstens eine Schließstellung bewegt zu werden, in welcher keine Zugangsmöglichkeit in den Bearbeitungsraum geschaffen ist.

In dem Bearbeitungsraum ist wenigstens eine Bearbeitungseinheit angeordnet, welche ein Bearbeitungswerkzeug zur spanenden Bearbeitung eines Werkstücks umfasst. Bei dem Bearbeitungswerkzeug kann es sich z. B. um ein Bohrwerkzeug und/oder um ein Drehwerkzeug und/oder um ein Fräswerkzeug handeln. Mithin kann die wenigstens eine Bearbeitungseinheit als eine Bohreinheit, eine Dreheinheit oder eine Fräseinheit oder eine kombinierte Bohr- und/oder Dreh- und/oder Fräseinheit ausgebildet sein oder eine solche umfassen. Die Bearbeitungseinheit und/oder das Bearbeitungswerkzeug kann, je nach konkreter Ausführung, in wenigstens einem translatorischen und/oder rotatorischen Bewegungsfreiheitsgrad, z. B. relativ zu einer horizontalen und/oder vertikalen Raumachse, bewegbar gelagert sein, z. B. um ein spanend zu bearbeitendes Werkstück an verschiedenen Abschnitten und/oder in verschiedenen Ausrichtungen spanend bearbeiten zu können. Das Bearbeitungszentrum kann sonach eine vollständige spanende Bearbeitung eines spanend zu bearbeitenden Werkstücks ermöglichen.

Das Bearbeitungswerkzeug ist insbesondere eingerichtet, ein spanend zu bearbeitendes Werkstück in wenigstens einer bzw. relativ zu wenigstens einer Bearbeitungsachse spanend zu bearbeiten. Für ein eine Rotations- bzw. eine Zentralachse aufweisendes, spanend zu bearbeitendes Werkstück gilt typischerweise, dass dieses im Rahmen der Bearbeitung vermittels der Bearbeitungseinheit typischerweise koaxial bezüglich der wenigstens einen Bearbeitungsachse oder parallel zu der wenigstens einen Bearbeitungsachse angeordnet ist. Die wenigstens eine Bearbeitungsachse kann eine horizontal ausgerichtete Achse sein. Insbesondere kann die wenigstens eine Bearbeitungsachse eine parallel zu einer Längsachse des Maschinenbetts bzw. Maschinengestells ausgerichtete Achse sein. Für ein eine Rotations- bzw. eine Zentralachse aufweisendes, spanend zu bearbeitendes Werkstück gilt typischerweise, dass dieses im Rahmen der Bearbeitung vermittels der Bearbeitungseinheit typischerweise koaxial bezüglich der wenigstens einen Bearbeitungsachse oder parallel zu dieser angeordnet ist.

Wie sich im Weiteren ergibt, kann das Maschinenbett bzw. Maschinengestell gegebenenfalls verlängert ausgeführt sein, sodass es sich nicht nur innerhalb des Bearbeitungsraums, sondern auch außerhalb des Bearbeitungsraums erstreckt. Insbesondere kann sich das Maschinenbett bzw. Maschinengestell gegebenenfalls in einen Bereich außerhalb einer Gehäusestruktur des Bearbeitungszentrums erstrecken, sodass das Maschinenbett bzw. Maschinengestell sowohl Abschnitte innerhalb als auch außerhalb der Gehäusestruktur des Bearbeitungszentrums aufweist.

Das Bearbeitungszentrum umfasst weiterhin wenigstens ein Transportfahrzeug. Das Transportfahrzeug ist mit einer Aufnahmeeinrichtung zur Aufnahme wenigstens zweier Werkstücke ausgebildet bzw. umfasst eine solche. Das Transportfahrzeug kann sonach eine Grund(körper)struktur, z. B. in Form eines Chassis bzw. eines Fahrgestells, umfassen, an bzw. auf welchem die Aufnahmeeinrichtung zur Aufnahme wenigstens zweier Werkstücke angeordnet oder ausgebildet ist.

Die Aufnahmeeinrichtung ist sonach grundsätzlich eingerichtet, wenigstens zwei Werkstücke - hierbei kann es sich um unbearbeitete Werkstücke und/oder um zumindest abschnittsweise bearbeitete Werkstücke handeln - aufzunehmen. Dies bedeutet jedoch nicht, dass die Aufnahmeeinrichtung im Betrieb des Bearbeitungszentrums zwingend stets wenigstens zwei Werkstücke aufnimmt, die Aufnahmeeinrichtung ist hierfür lediglich grundsätzlich eingerichtet.

Unter einer Aufnahme eines jeweiligen Werkstücks vermittels der Aufnahmeeinrichtung kann eine unmittelbare oder mittelbare Halterung des jeweiligen Werkstücks zu verstehen sein. Entsprechende zur Aufnahme wenigstens eines Werkstücks eingerichtete Wirkabschnitte der Aufnahmeeinrichtung können sonach mittelbar oder unmittelbar an einem jeweiligen Werkstück angreifen, um das jeweilige Werkstück unmittelbar oder mittelbar zu haltern. Die Aufnahmeeinrichtung kann sonach eingerichtet sein, wenigstens ein Werkstück unmittelbar aufzunehmen; das jeweilige Werkstück kann sonach ohne Zwischenschaltung eines das Werkstück lagernden Vorrichtungssystems, wie z. B. eines Klemm- oder Spannsystems, vermittels der Aufnahmeeinrichtung aufgenommen werden. Entsprechende Wirkabschnitte der Aufnahmeeinrichtung können hier an dem Werkstück angreifen, um dieses aufzunehmen. Alternativ oder ergänzend kann die Aufnahmeeinrichtung eingerichtet sein, wenigstens ein Werkstück mittelbar aufzunehmen, das jeweilige Werkstück kann sonach unter Zwischenschaltung eines das Werkstück lagernden Vorrichtungssystems, wie z. B. eines Klemm- oder Spannsystems, vermittels der Aufnahmeeinrichtung aufgenommen werden. Entsprechende Wirkabschnitte der Aufnahmeeinrichtung können hier an dem Vorrichtungssystem angreifen, um dieses aufzunehmen. Ein entsprechendes Vorrichtungssystem kann z. B. als ein Spannfutter, insbesondere ein Kraftspannfutter, oder ein Nullpunktspannsystem ausgebildet sein oder ein solches umfassen.

Eine Halterung eines jeweiligen Werkstücks vermittels der Aufnahmeeinrichtung beinhaltet typischerweise, dass ein zu bearbeitendes Werkstück vermittels der Aufnahmeeinrichtung so aufgenommen bzw. gehaltert ist, dass es innerhalb des Bearbeitungsraums von der Aufnahmeeinrichtung an ein Spannsystem des Bearbeitungszentrums übergeben bzw. von diesem übernommen werden kann. Gleichermaßen beinhaltet eine Halterung des jeweiligen zu bearbeitenden bzw. bearbeiteten Werkstücks vermittels der Aufnahmeeinrichtung typischerweise, dass ein bearbeitetes Werkstück vermittels der Aufnahmeeinrichtung so aufnehmbar bzw. halterbar ist, dass es innerhalb des Bearbeitungsraums von einem Spannsystem des Bearbeitungszentrums an die Aufnahmeeinrichtung übergeben bzw. von dieser übernommen werden kann.

Grundsätzlich ebenso ist es denkbar, dass ein vermittels der Aufnahmeeinrichtung aufgenommenes Werkstück vermittels der Bearbeitungseinheit innerhalb des Bearbeitungsraums bestimmungsgemäß spanend bearbeitet werden kann; in diesem Fall muss das Werkstück nicht an ein Spannsystem des Bearbeitungszentrums übergeben bzw. von diesem übernommen werden.

Die Aufnahmeeinrichtung ist sonach eingerichtet, ein jeweiliges Werkstück in einer bestimmten Ausrichtung und/oder Position aufzunehmen bzw. zu haltern. Die Aufnahmeeinrichtung kann insbesondere eingerichtet sein, ein jeweiliges Werkstück in einer Ausrichtung und/oder Position aufzunehmen bzw. zu haltern, welche einer Ausrichtung und/oder Position entspricht, in welcher das Werkstück an ein Spannsystem des Bearbeitungszentrums übergebbar ist, oder in welcher das Werkstück vermittels der Bearbeitungseinheit spanend bearbeitbar bzw. spanend zu bearbeiten ist. Mithin kann die Aufnahmeeinrichtung konkret z. B. eingerichtet sein, ein jeweiliges Werkstück in einer Ausrichtung und/oder Position aufzunehmen bzw. zu haltern, in welcher eine Rotations- bzw. Zentralachse des Werkstücks koaxial bezüglich der Bearbeitungsachse oder parallel zu der Bearbeitungsachse angeordnet ist. Eine Aufnahme eines Werkstücks in einer solchen Ausrichtung und/oder Position kann eine Übergabe des Werkstücks an ein Spannsystem des Bearbeitungszentrums oder eine spanende Bearbeitung des Werkstücks vermittels der Bearbeitungseinheit ermöglichen.

Das Transportfahrzeug nebst der Aufnahmeeinrichtung ist in einem translatorischen Bewegungsfreiheitsgrad zumindest zwischen wenigstens einer ersten Position innerhalb des Bearbeitungszentrums, insbesondere innerhalb des Bearbeitungsraums, und wenigstens einer zweiten Position außerhalb des Bearbeitungszentrums bewegbar gelagert. Das Transportfahrzeug lässt sich sonach entlang einer Bewegungsachse translatorisch in wenigstens eine erste Position innerhalb des Bearbeitungszentrums, insbesondere innerhalb des Bearbeitungsraums, und in wenigstens eine zweite Position außerhalb des Bearbeitungszentrums bewegen. Die Bewegungsachse des Transportfahrzeugs kann z. B. koaxial bezüglich der Bearbeitungsachse oder parallel zu der Bearbeitungsachse angeordnet bzw. ausgerichtet sein.

Die wenigstens eine erste Position kann einer Übergabeposition oder einer Bearbeitungsposition wenigstens eines vermittels der Aufnahmeeinrichtung aufgenommenen Werkstücks entsprechen. Wenigstens ein vermittels der Aufnahmeeinrichtung aufgenommenes Werkstück kann in der wenigstens einen ersten Position mithin so innerhalb des Bearbeitungsraums angeordnet bzw. ausgerichtet sein, dass es sich in einer Übergabeposition befindet, in welcher es an ein Spannsystem des Bearbeitungszentrums übergebbar ist (die spanende Bearbeitung des Werkstücks vermittels der Bearbeitungseinheit bzw. dem Bearbeitungswerkzeug erfolgt sonach im vermittels des Spannsystems aufgespannten Zustand). Alternativ kann wenigstens ein vermittels der Aufnahmeeinrichtung aufgenommenes Werkstück in der wenigstens einen ersten Position so innerhalb des Bearbeitungsraums angeordnet bzw. ausgerichtet sein, dass es sich in einer Bearbeitungsposition befindet, in welcher es vermittels der Bearbeitungseinheit bzw. dem Bearbeitungswerkzeug spanend bearbeitbar ist.

Sofern das Bearbeitungszentrum eine Gehäusestruktur umfasst, befindet sich die wenigstens eine erste Position demnach typischerweise innerhalb der Gehäusestruktur des Bearbeitungszentrums, wohingegen sich die wenigstens eine zweite Position typischerweise außerhalb der Gehäusestruktur des Bearbeitungszentrums befindet. Sofern das Bearbeitungszentrum eine Gehäusestruktur mit einem, wie erläutert, zwischen einer Offen- und einer Schließstellung bewegbar gelagerten Gehäusestrukturelement umfasst, kann es erforderlich sein, das bewegbar gelagerte Gehäusestrukturelement in die Offenstellung zu bewegen, um das Transportfahrzeug von der ersten Position in die zweite Position zu bewegen oder umgekehrt.

Durch die Möglichkeit, dass das Transportfahrzeug in wenigstens eine entsprechende zweite Position außerhalb des Bearbeitungszentrum, d. h. insbesondere außerhalb des Bearbeitungsraums, bewegbar ist, lässt sich außerhalb des Bearbeitungszentrums, d. h. insbesondere außerhalb des Bearbeitungsraums, sowohl ein besonders effizientes Aufnehmen bzw. Beladen wenigstens eines spanend zu bearbeitenden Werkstücks auf die Aufnahmeeinrichtung als auch ein besonders effizientes Entnehmen bzw. Entladen wenigstens eines spanend bearbeiteten Werkstücken von der Aufnahmeeinrichtung realisieren. Entsprechende Aufnahme- bzw. Belade- als auch entsprechende Entnahme- bzw. Entladevorgänge können vermittels einer dem Bearbeitungszentrum zuordbaren bzw. zugeordneten Handhabungseinrichtung, wie z. B. einem Handhabungsroboter, durchgeführt werden.

Zu einem besonders effizienten Entnehmen bzw. Entladen von Werkstücken trägt bei, dass das Transportfahrzeug und/oder die Aufnahmeeinrichtung in einem rotatorischen Bewegungsfreiheitsgrad bewegbar gelagert ist. Das Transportfahrzeug und/oder die Aufnahmeeinrichtung sind sonach einzeln oder gemeinsam in einem rotatorischen Bewegungsfreiheitsgrad bewegbar gelagert. Durch entsprechende Dreh- bzw. Rotationsbewegungen des Transportfahrzeugs und/oder der Aufnahmeeinrichtung in dem rotatorischen Bewegungsfreiheitsgrad können Aufnahme- bzw. Entnahmevorgänge von Werkstücken vermittels der Aufnahmeeinrichtung noch effizienter ausgeführt werden, insbesondere, weil ein auf einer Seite der Aufnahmeeinrichtung aufzunehmendes, spanend zu bearbeitendes Werkstück durch entsprechende Rotation des Transportfahrzeugs und/oder der Aufnahmeeinrichtung in eine Ausrichtung und/oder Position verbracht werden kann, in welcher es nach Bewegen des Transportfahrzeugs in die erste Position, d. h. insbesondere in eine entsprechende Übergabe- oder Bearbeitungsposition, spanend bearbeitet werden kann, und/oder weil ein auf einer anderen Seite der Aufnahmeeinrichtung aufgenommenes, bereits spanend bearbeitetes Werkstück durch entsprechende Rotation des Transportfahrzeugs und/oder der Aufnahmeeinrichtung in eine Ausrichtung und/oder Position verbracht werden kann, in welcher es nach Bewegen des Transportfahrzeugs in die zweite Position z. B. vermittels einer Handhabungseinrichtung, wie z. B. einem Handhabungsroboter, von der Aufnahmeeinrichtung entnommen werden kann.

Grundsätzlich kann durch entsprechende Rotation des Transportfahrzeugs und/oder der Aufnahmeeinrichtung in dem rotatorischen Bewegungsfreiheitsgrad jeder Aufnahmebereich der Aufnahmeeinrichtung in eine Ausrichtung verbracht werden, in welcher er einer Werkstückhalterungseinrichtung, d. h. z. B. einem Spannsystem, des Bearbeitungszentrums gegenüber liegend angeordnet ist. Hiervon ausgehend kann ein an dem Aufnahmebereich der Aufnahmeeinrichtung aufgenommenes bzw. gehaltertes Werkstück durch Bewegen des Transportfahrzeugs in die erste Position in eine entsprechende Übergabe- oder Bearbeitungsposition verbracht werden.

Die Bewegungen des Transportfahrzeugs und/oder der Aufnahmeeinrichtung in dem wenigstens einen rotatorischen Bewegungsfreiheitsgrad erfolgen um eine Dreh- bzw. Rotationsachse. Bei der Dreh- bzw. Rotationsachse kann es sich um eine winklig, d. h. insbesondere rechtwinklig, zu der Bearbeitungsachse und damit winklig bzw. rechtwinklig zu der Bewegungsachse des Transportfahrzeugs ausgerichtete Achse handeln.

Was den rotatorischen Bewegungsfreiheitsgrad der Aufnahmeeinrichtung angeht, gilt, dass dieser typischerweise Rotationsbewegungen der Aufnahmeeinrichtung relativ zu dem Transportfahrzeug, d. h. insbesondere relativ zu der erwähnten Grund(körper)struktur, z. B. in Form eines Chassis bzw. eines Fahrgestells, des Transportfahrzeugs ermöglicht. Die Aufnahmeeinrichtung kann also relativ zu dem zu der Grund(körper)struktur und grundsätzlich unabhängig von dieser in dem wenigstens einen rotatorischen Bewegungsfreiheitsgrad bewegt werden. Hierfür kann das Transportfahrzeug, d. h. insbesondere die Grund(körper)struktur, eine oder mehrere Drehlagerungen umfassen, über welche die Aufnahmeeinrichtung drehbar relativ zu der Grund(körper)struktur gelagert ist.

Insgesamt liegt ein verbessertes Bearbeitungszentrum zur spanenden Bearbeitung eines Werkstücks vor.

Die Aufnahmeeinrichtung kann wenigstens zwei Aufnahmebereiche für jeweils wenigstens ein Werkstück aufweisen, wobei wenigstens ein Aufnahmebereich typischerweise so angeordnet und/oder ausgerichtet ist, dass ein Werkstück so aufnehmbar oder aufgenommen ist, dass es bei Bewegen des Transportfahrzeugs in die wenigstens eine erste Position in eine entsprechende Übergabe- oder Bearbeitungsposition verbringbar ist. Jeder Aufnahmebereich kann wenigstens eine Ebene bzw. Fläche aufweisen bzw. definieren, an welcher sich wenigstens ein Werkstück aufnehmen und damit, wie erwähnt, stabil haltern lässt.

Die wenigstens zwei Aufnahmebereiche der Aufnahmeeinrichtung sind typischerweise an unterschiedlichen Seiten der Aufnahmeeinrichtung angeordnet oder ausgebildet; insbesondere können die wenigstens zwei Aufnahmebereiche an einander gegenüber liegenden Seiten der Aufnahmeeinrichtung angeordnet oder ausgebildet sein. Sofern die Aufnahmeeinrichtung mehr als zwei Aufnahmebereiche aufweist, können diese ebenso an unterschiedlichen Seiten der Aufnahmeeinrichtung angeordnet oder ausgebildet sein. Für eine denkbare Ausführungsform mit drei Aufnahmebereichen gilt, dass die durch die jeweiligen Aufnahmebereiche definierten Ebenen bzw. Flächen jeweils unter einem Winkel von 120° relativ zueinander angeordnet sein können. Für eine ebenso denkbare Ausführungsform mit vier Aufnahmebereichen gilt, dass die durch die jeweiligen Aufnahmebereiche definierten Ebenen bzw. Flächen jeweils unter einem Winkel von 90° relativ zueinander angeordnet sein können. Grundsätzlich kann also gelten, dass durch die jeweiligen Aufnahmebereiche definierten Ebenen bzw. Flächen n (n ist eine ganze Zahl) jeweils unter einem Winkel α = 360°/n relativ zueinander angeordnet sein können.

Es wurde erwähnt, dass durch entsprechende Rotation des Transportfahrzeugs und/oder der Aufnahmeeinrichtung in dem wenigstens einen rotatorischen Bewegungsfreiheitsgrad grundsätzlich jeder Aufnahmebereich in eine Ausrichtung verbracht werden kann, in welcher er einer Werkstückhalterungseinrichtung, d. h. insbesondere einer ortsfesten Werkstückhalterungseinrichtung, wie z. B. einem Spannsystem, des Bearbeitungszentrums gegenüber liegend angeordnet ist. Das Transportfahrzeug und/oder die Aufnahmeeinrichtung können in dem rotatorischen Bewegungsfreiheitsgrad sonach in eine erste Stellung, in welcher ein erstes vermittels der Aufnahmeeinrichtung aufgenommenes Werkstück, dieses kann an einem ersten Aufnahmebereich der Aufnahmeeinrichtung aufgenommen sein, einer Werkstückhalterungseinrichtung des Bearbeitungszentrums gegenüber liegend angeordnet oder ausgerichtet ist, bewegbar gelagert sein. Alternativ oder ergänzend kann das Transportfahrzeug und/oder die Aufnahmeeinrichtung in dem rotatorischen Bewegungsfreiheitsgrad in eine zweite Stellung, in welcher ein zweites vermittels der Aufnahmeeinrichtung aufgenommenes Werkstück, dieses kann an einem zweiten Aufnahmebereich der Aufnahmeeinrichtung aufgenommen sein, der Werkstückhalterungseinrichtung des Bearbeitungszentrums gegenüber liegend angeordnet oder ausgerichtet ist, bewegbar gelagert sein.

Die erste Stellung des Transportfahrzeugs und/oder der Aufnahmeeinrichtung kann eine um 180° bezüglich der bzw. einer vertikalen Rotationsachse verdrehte Stellung relativ zu der zweiten Stellung sein und umgekehrt; dies gilt insbesondere für Konfigurationen der Aufnahmeeinrichtung mit zwei einander gegenüber liegend angeordneten oder ausgebildeten Aufnahmebereichen.

Die Aufnahmeeinrichtung kann einen, insbesondere käfig- oder korbartigen, Aufnahmerahmen bzw. ein, insbesondere käfig- oder korbartiges, Aufnahmegestell aufweisen. Der Aufnahmerahmen bzw. das Aufnahmegestell kann durch ein oder mehrere Rahmen- bzw. Gestellelemente gebildet sein, welche in ein oder mehreren Raumrichtungen bzw. Raumebenen unter Ausbildung des Aufnahmerahmens bzw. Aufnahmegestells miteinander verbunden sind. An dem Aufnahmerahmen bzw. dem Aufnahmegestell können entsprechende Aufnahmebereiche für Werkstücke angeordnet oder ausgebildet sein.

Wie weiter oben erwähnt wurde, kann die Aufnahmeeinrichtung grundsätzlich eingerichtet sein, ein Werkstück mittelbar oder unmittelbar zu haltern. An dem Aufnahmerahmen bzw. dem Aufnahmegestell kann sonach wenigstens eine erste Halterungseinrichtung zur Halterung eines ersten Werkstücks oder zur Halterung eines ein erstes Werkstück lagernden Vorrichtungssystems, insbesondere eines Klemm- oder Spannsystems, sowie wenigstens eine zweite Halterungseinrichtung zur Halterung eines zweiten Werkstücks oder zur Halterung eines ein zweites Werkstück lagernden Vorrichtungssystems, insbesondere eines Klemm- oder Spannsystems angeordnet oder ausgebildet sein.

Die erste Halterungseinrichtung kann ein oder mehrere erste Halterungselemente aufweisen, welche in wenigstens eine Halterungsstellung, in welcher eine ein erstes Werkstück oder ein erstes Werkstück lagerndes Vorrichtungssystem halternde Halterungskraft ausgebildet ist, und in wenigstens eine Nichthalterungsstellung, in welcher keine ein erstes Werkstück oder ein erstes Werkstück lagerndes Vorrichtungssystem halternde Halterungskraft ausgebildet ist, überführbar sind. Jeweilige erste Halterungselemente können sonach bewegbar an dem Aufnahmerahmen bzw. dem Aufnahmegestell angeordnet oder ausgebildet sein. Die erste Halterungseinrichtung kann einem ersten Aufnahmebereich der Aufnahmeeinrichtung zugeordnet sein. Alternativ oder ergänzend kann die zweite Halterungseinrichtung ein oder mehrere zweite Halterungselemente aufweisen, welche in wenigstens eine Halterungsstellung, in welcher eine ein zweites Werkstück oder ein zweites Werkstück lagerndes Vorrichtungssystem halternde Halterungskraft ausgebildet ist, und in wenigstens eine Nichthalterungsstellung, in welcher keine ein zweites Werkstück oder ein zweites Werkstück lagerndes Vorrichtungssystem halternde Halterungskraft ausgebildet ist, überführbar sind. Jeweilige zweite Halterungselemente können sonach bewegbar an dem Aufnahmerahmen der Aufnahmeraum angeordnet oder ausgebildet sein. Die zweite Halterungseinrichtung kann einem zweiten Aufnahmebereich der Aufnahmeeinrichtung zugeordnet sein. Sofern die Aufnahmeeinrichtung mehr als zwei Aufnahmebereiche umfasst, können mehr als zwei entsprechend konfigurierte Halterungseinrichtungen vorgesehen sein.

Die ein oder mehreren ersten Halterungselemente können z. B. als Klemm- oder Spannbacken, insbesondere als in der jeweiligen Halterungsstellung axial und/oder radial bezüglich der Bearbeitungsachse oder einer Zentralachse des jeweiligen Werkstücks wirkende Klemm- oder Spannbacken, ausgebildet sein. Derart lässt sich eine stabile Halterung eines jeweiligen Werkstücks realisieren.

Alternativ oder ergänzend können die ein oder mehreren zweiten Halterungselemente als Klemm- oder Spannbacken ausgebildet sind als Klemm- oder Spannbacken, insbesondere als in der jeweiligen Halterungsstellung axial und/oder radial bezüglich der Bearbeitungsachse oder einer Zentralachse des jeweiligen Werkstücks wirkende Klemm- oder Spannbacken, ausgebildet sind. Derart lässt sich eine stabile Halterung eines jeweiligen Werkstücks realisieren.

Bei den ersten und/oder zweiten Halterungselementen kann es sich sonach um die weiter oben erwähnten Wirkabschnitte der Aufnahmeeinrichtung handeln.

Die ein oder mehreren ersten Halterungselemente und/oder die ein oder mehreren zweiten Halterungselemente können bezüglich der Bearbeitungsachse oder einer Zentralachse des jeweiligen Werkstücks z. B. in Umfangsrichtung gleichmäßig oder ungleichmäßig verteilt angeordnet oder ausgebildet sein.

Um das Transportfahrzeug und/oder die Aufnahmeeinrichtung in entsprechende translatorische und/oder rotatorische Bewegungen zu versetzen, kann das Bearbeitungszentrum eine Bereitstellungseinrichtung zur Bereitstellung von Energie zur Erzeugung wenigstens einer das Transportfahrzeug und/oder die Aufnahmeeinrichtung in translatorische und/oder rotatorische Bewegungen versetzenden Antriebskraft umfassen. Dabei kann die das Transportfahrzeug und/oder die Aufnahmeeinrichtung in entsprechende translatorische und/oder rotatorische Bewegungen versetzende Antriebskraft durch ein einer, z. B. motorischen, Antriebseinheit des Transportfahrzeugs und/oder der Aufnahmeeinrichtung über die Bereitstellungseinrichtung bereitgestelltes Antriebsmedium erzeugbar sein. Bei dem Antriebsmedium kann es sich um einen Energieträger, z. B. in Form von elektrischer Energie, hydraulischer Energie oder pneumatischer Energie, handeln. Die Antriebseinheit des Transportfahrzeugs und/oder der Aufnahmeeinrichtung kann daher z. B. als eine elektrische, elektromechanische, hydraulische oder pneumatische Antriebseinheit ausgebildet sein oder eine solche umfassen.

Der über die Bereitstellungseinrichtung bereitgestellte Energieträger kann über einen mit einem Eingang des Transportfahrzeugs und/oder der Aufnahmeeinrichtung kommunizierenden Ausgang der Bereitstellungseinrichtung bereitstellbar oder bereitgestellt sein. Die Bereitstellungseinrichtung kann sonach einen Ausgang, z. B. in Form eines Ausgangsanschlusses für einen jeweiligen Energieträger, aufweisen, über welchen ein Energieträger aus dem Bearbeitungszentrum abgeführt werden kann. Entsprechend kann das Transportfahrzeug und/oder die Aufnahmeeinrichtung einen Eingang, z. B. in Form eines Eingangsanschlusses für einen jeweiligen Energieträger aufweisen, über welchen dem Transportfahrzeug und/oder der Aufnahmeeinrichtung der Energieträger zugeführt werden kann. Ein entsprechender Ausgang und ein entsprechender Eingang können über Leitungsverbindungen bzw. Versorgungsleitungen, wie z. B. Kabel, Schläuche, Rohre, etc., miteinander verbunden sein. Entsprechende Leitungsverbindungen bzw. Versorgungsleitungen können in einem hierfür vorgesehenen Träger, wie z. B. einem Schleppkabel, einer Energieführungskette, einer Kabeltrasse, etc. aufgenommen sein. Auch Datenkabel, etwa zur Übertragung von Steuerinformationen, können in einem entsprechenden Träger aufgenommen sein.

Die Energie zum Versetzen des Transportfahrzeugs und/oder der Aufnahmeeinrichtung in entsprechende translatorische und/oder rotatorische Bewegungen kann sonach über eine Bereitstellungseinrichtung des Bearbeitungszentrums bereitgestellt werden; das Transportfahrzeug und/oder die Aufnahmeeinrichtung muss sonach nicht über eine eigene und damit von dem Bearbeitungszentrum unabhängige Energieversorgung verfügen, als die für den Betrieb des Bearbeitungszentrums ohnehin erforderliche bzw. gegebene Energieversorgung auch für die Energieversorgung des Transportfahrzeugs und/oder der Aufnahmeeinrichtung genutzt werden kann. Insbesondere kann die für den Betrieb des Bearbeitungszentrums ohnehin erforderliche Energieversorgung genutzt werden, um entsprechende Antriebskräfte zu erzeugen, über welche das Transportfahrzeug und/oder die Aufnahmeeinrichtung in entsprechende translatorische und/oder rotatorische Bewegungen versetzt werden kann. Entsprechende Antriebskräfte können konkret z. B. über motorische Antriebseinheiten des Transportfahrzeugs und/oder der Aufnahmeeinrichtung erzeugt werden, welche mit den von der Bereitstellungseinrichtung bereitgestellten Energieträgern betrieben sind bzw. werden.

In analoger Weise kann die für die Bewegungen von Halterungselementen in jeweilige Halterungsstellung und Nichthalterungsstellungen erforderliche Energie und damit die Energieversorgung jeweiliger Halterungseinrichtungen über die für den Betrieb des Bearbeitungszentrums ohnehin erforderliche bzw. gegebene Energieversorgung erfolgen.

Die konkrete bewegbare Lagerung des Transportfahrzeugs kann über verschiedenartige Lagereinrichtungen bzw. -elemente realisiert sein. Das Transportfahrzeug kann sonach als ein über wenigstens ein Lagerelement, insbesondere ein Gleit-, Kugel- oder Rollenlagerelement, auf einer Transportfahrbahn, insbesondere einer Schiene, geführter Schlitten oder Wagen ausgebildet sein oder einen solchen umfassen. Grundsätzlich kommen Linearantriebe bzw. - einheiten, wie z. B. Gleitantriebe bzw. -einheiten, Spindelantriebe bzw. -einheiten, Zahnstangenantriebe bzw. -einheiten, etc., in Betracht, um das Transportfahrzeug in dem translatorischen Bewegungsfreiheitsgrad bewegbar zu lagern.

Die Transportfahrbahn kann sonach den translatorischen Bewegungsfreiheitsgrad definieren, in welchem das Transportfahrzeug, wie beschrieben, in die wenigstens eine erste und in die wenigstens eine zweite Position bewegbar gelagert ist. Sowohl seitens des Transportfahrzeugs als auch seitens der Transportfahrbahn, welche, wie erwähnt, durch das Maschinenbett bzw. Maschinengestell des Bearbeitungszentrums gebildet sein kann, können, z. B. formschlüssig, zusammenwirkende Führungselemente vorhanden sein, welche eine stabil geführte Bewegung des Transportfahrzeugs in dem translatorischen Bewegungsfreiheitsgrad ermöglichen. Die Transportfahrbahn kann zumindest abschnittsweise in das, wie weiter oben erläutert, gegebenenfalls in Bereiche außerhalb einer Gehäusestruktur des Bearbeitungszentrums verlängerte, Maschinenbett bzw. Maschinengestell des Bearbeitungszentrums integriert sein.

Es wurde erwähnt, dass Werkstücke vermittels Handhabungseinrichtungen auf die Aufnahmeeinrichtung aufgenommen und/oder von der Aufnahmeeinrichtung entnommen werden können. Das Bearbeitungszentrum kann sonach wenigstens eine, insbesondere durch einen Industrieroboter implementierte oder einen solchen umfassende, Handhabungseinrichtung umfassen, welche zum Beladen des Transportfahrzeugs, insbesondere des in eine Beladeposition außerhalb des Bearbeitungszentrums bewegten Transportfahrzeugs, mit wenigstens einem Werkstück und/oder zum Entladen wenigstens eines Werkstücks von dem Transportfahrzeug, insbesondere von dem in eine Entladeposition außerhalb des Bearbeitungszentrums bewegten Transportfahrzeugs, eingerichtet ist.

Die wenigstens eine Handhabungseinrichtung kann insbesondere zur Übergabe eines Werkstücks, insbesondere eines noch nicht bearbeiteten Werkstücks oder eines zumindest abschnittsweise bearbeiteten Werkstücks, von dem Bearbeitungszentrum an eine Prozessstation, wie z. B. eine Rüststation oder eine Umrüststation, und/oder an ein weiteres Bearbeitungszentrum eingerichtet sein.

Das Bearbeitungszentrum kann eine hardware- und/oder softwaremäßig implementiert Steuereinrichtung umfassen, welche zur Steuerung des Betriebs des Bearbeitungszentrums eingerichtet ist. Die Steuereinrichtung ist insbesondere eingerichtet, entsprechende Bewegungen des Transportfahrzeugs und/oder der Aufnahmeeinrichtung sowie entsprechende Bewegungen der Halterungseinrichtungselemente koordiniert zu steuern, um, insbesondere automatisierbar bzw. automatisiert, z. B. ein bestimmungsgemäßes Beladen der Aufnahmeeinrichtung mit wenigstens einem spanend zu bearbeitenden Werkstück, ein bestimmungsgemäßes Übergeben eines spanend zu bearbeitenden Werkstücks von der Aufnahmeeinrichtung z. B. an ein Spannsystem des Bearbeitungszentrums, ein bestimmungsgemäßes spanendes Bearbeiten wenigstens eines Werkstücks vermittels der Bearbeitungseinheit, ein bestimmungsgemäßes Übergeben eines spanend bearbeiteten Werkstücks an die Aufnahmeeinrichtung sowie ein bestimmungsgemäßes Entladen wenigstens eines spanend bearbeiteten Werkstücks von der Aufnahmeeinrichtung zu ermöglichen.

Ein zweiter Aspekt der Erfindung betrifft daher eine Bearbeitungsanordnung zur spanenden Bearbeitung eines Werkstücks. Die Bearbeitungsanordnung umfasst wenigstens ein erstes Bearbeitungszentrum gemäß dem ersten Aspekt der Erfindung, wenigstens eine Prozessstation, wie z. B. eine Rüststation oder eine Umrüststation, und/oder wenigstens ein weiteres Bearbeitungszentrum sowie wenigstens eine Handhabungseinrichtung. Die wenigstens eine Handhabungseinrichtung ist insbesondere zur Übergabe eines Werkstücks, insbesondere eines noch nicht bearbeiteten Werkstücks oder eines zumindest abschnittsweise bearbeiteten Werkstücks, von dem wenigstens einen ersten Bearbeitungszentrum an die wenigstens eine Prozessstation und/oder an das wenigstens eine weitere Bearbeitungszentrum, oder umgekehrt, eingerichtet.

Sämtliche Ausführungen im Zusammenhang mit dem Bearbeitungszentrum gemäß dem ersten Aspekt der Erfindung gelten analog für die Bearbeitungsanordnung gemäß dem zweiten Aspekt der Erfindung.

Die Bearbeitungsanordnung kann im Hinblick auf die Anordnung der dieser zugehörigen Einheiten, d. h. des wenigstens einen ersten Bearbeitungszentrums, der wenigstens einen Prozessstation und/oder des wenigstens einen weiteren Bearbeitungszentrums, verschiedenartig konfigurierbar bzw. konfiguriert sein. Beispielsweise kann das wenigstens eine erste Bearbeitungszentrum und die wenigstens eine Prozessstation und/oder das wenigstens eine weitere Bearbeitungszentrum in Reihe oder winklig zueinander, insbesondere parallel zueinander, geschaltet angeordnet sein. Sofern die Bearbeitungsanordnung mehrere Bearbeitungszentren umfasst, kann die wenigstens eine Handhabungseinrichtung zwischen diesen angeordnet sein, z. B. um eine Übergabe eines Werkstücks von einem Bearbeitungszentrum in ein anderes Bearbeitungszentrum zu ermöglichen.

Ein dritter Aspekt der Erfindung betrifft ein Verfahren zum Betrieb wenigstens eines Bearbeitungszentrums gemäß dem ersten Aspekt der Erfindung. Das Verfahren umfasst zumindest die folgenden Schritte: Bewegen des Transportfahrzeugs, welches wenigstens ein zu bearbeitendes Werkstück aufgenommen hat, in eine Position innerhalb des Bearbeitungsraums eines Bearbeitungszentrums (erste Position), insbesondere in eine entsprechende Übergabe- oder Bearbeitungsposition, und Bewegen des Transportfahrzeugs, welches wenigstens ein in dem Bearbeitungsraum des Bearbeitungszentrums bearbeitetes Werkstück aufgenommen hat, in eine Position außerhalb des Bearbeitungsraums (zweite Position).

Das Verfahren kann ferner einen Schritt des Bewegens des Transportfahrzeugs oder der Aufnahmeeinrichtung in dem rotatorischen Bewegungsfreiheitsgrad außerhalb oder innerhalb des Bearbeitungsraums umfassen. Derart können z. B. Be- und Entladevorgänge der Aufnahmeeinrichtung mit wenigstens einem Werkstück realisiert werden. Hierzu kann eine entsprechende Handhabungseinrichtung eingesetzt werden, die eingerichtet ist, das jeweilige Werkstück unmittelbar oder mittelbar zu greifen.

In einer konkreten Ausführungsform kann das Verfahren die folgenden Schritte umfassen:
- Bewegen des Transportfahrzeugs, welches wenigstens ein zu bearbeitendes Werkstück aufgenommen hat, in eine Position, insbesondere in eine Übergabe- oder Bearbeitungsposition, in welcher ein Bearbeiten des Werkstücks vermittels der Bearbeitungseinheit möglich ist, innerhalb des Bearbeitungsraums,
- Übergeben des wenigstens einen Werkstücks von der Aufnahmeeinrichtung an ein Spannsystem des Bearbeitungszentrums,
- Bearbeiten des wenigstens einen vermittels des Spannsystems gespannten Werkstücks innerhalb des Bearbeitungsraums vermittels der Bearbeitungseinheit,
- Übergeben des wenigstens einen bearbeiteten Werkstücks von dem Spannsystem des Bearbeitungszentrums an die Aufnahmeeinrichtung,
- Bewegen des Transportfahrzeugs, welches das wenigstens eine bearbeitete Werkstück aufgenommen hat, in eine Position außerhalb des Bearbeitungszentrums,
- Entladen des wenigstens einen bearbeiteten Werkstücks von dem Transportfahrzeug.

Das Verfahren kann ferner die folgenden Schritte umfassen:
- Drehen des Transportfahrzeugs und/oder der Aufnahmeeinrichtung in dem rotatorischen Bewegungsfreiheitsgrad,
- Beladen der Aufnahmeeinrichtung mit einem zweiten zu bearbeitenden Werkstück,
- Bewegen des Transportfahrzeugs, welches das zweite zu bearbeitende Werkstück aufgenommen hat, in eine Position innerhalb des Bearbeitungsraums, insbesondere in eine Übergabe- oder Bearbeitungsposition, in welcher ein Bearbeiten des zweiten Werkstücks vermittels der Bearbeitungseinheit möglich ist,
- Übergeben des wenigstens einen zweiten zu bearbeitenden Werkstücks von der Aufnahmeeinrichtung an ein Spannsystem des Bearbeitungszentrums,
- Bearbeiten des wenigstens einen, vermittels des Spannsystems gespannten zweiten Werkstücks innerhalb des Bearbeitungsraums vermittels der Bearbeitungseinheit,
- Übergeben des wenigstens einen zweiten bearbeiteten Werkstücks von dem Spannsystem des Bearbeitungszentrums an die Aufnahmeeinrichtung,
- Bewegen des Transportfahrzeugs, welches das wenigstens eine zweite bearbeitete Werkstück aufgenommen hat, in eine Position außerhalb des Bearbeitungszentrums,
- Entladen des wenigstens einen zweiten bearbeiteten Werkstücks von dem Transportfahrzeug.

In einer weiteren konkreten Ausführungsform kann das Verfahren die folgenden Schritte umfassen:
- Bewegen des Transportfahrzeugs, welches zwei mechanisch zu bearbeitende Werkstücke aufgenommen hat, in eine Position, insbesondere in eine Übergabe- oder Bearbeitungsposition, in welcher ein Bearbeiten eines ersten Werkstücks vermittels der Bearbeitungseinheit möglich ist, innerhalb des Bearbeitungsraums,
- Übergeben des ersten zu bearbeitenden Werkstücks von der Aufnahmeeinrichtung an ein Spannsystem des Bearbeitungszentrums in dem Bearbeitungsraum,
- Bearbeiten des vermittels des Spannsystems gespannten ersten Werkstücks vermittels der Bearbeitungseinheit,
- Übergeben des ersten bearbeiteten Werkstücks von dem Spannsystem des Bearbeitungszentrums an die Aufnahmeeinrichtung,
- Bewegen des Transportfahrzeugs, welches das erste bearbeitete Werkstück und das zweite (noch unbearbeitete) Werkstück aufgenommen hat, in eine Position außerhalb des Bearbeitungszentrums,
- Entladen des ersten bearbeiteten Werkstücks von dem Transportfahrzeug,
- gegebenenfalls Beladen der Aufnahmeeinrichtung mit einem dritten spanend zu bearbeitenden Werkstück an einem freien Aufnahmebereich der Aufnahmeeinrichtung, z. B. an welchem vormals das erste Werkstück aufgenommen war,
- Drehen des Transportfahrzeugs und/oder der Aufnahmeeinrichtung in dem rotatorischen Bewegungsfreiheitsgrad derart, dass das zweite Werkstück in eine Stellung, in welcher das zweite Werkstück einer Werkstückhalterungseinrichtung, wie z. B. einem Spannsystem, des Bearbeitungszentrums gegenüber liegend angeordnet oder ausgerichtet ist, verbracht wird,
- Bewegen des Transportfahrzeugs in eine Position, insbesondere in eine Übergabe- oder Bearbeitungsposition, innerhalb des Bearbeitungsraums, in welcher ein Bearbeiten des zweiten Werkstücks vermittels der Bearbeitungseinheit möglich ist,
- Übergeben des zweiten zu bearbeitenden Werkstücks von der Aufnahmeeinrichtung an das Spannsystem des Bearbeitungszentrums,
- Bearbeiten des vermittels des Spannsystems gespannten zweiten Werkstücks vermittels der Bearbeitungseinheit,
- Übergeben des zweiten bearbeiteten Werkstücks von dem Spannsystem an die Aufnahmeeinrichtung,
- Bewegen des Transportfahrzeugs, welches das zweite bearbeitete Werkstück und gegebenenfalls das dritte Werkstück aufgenommen hat, in eine Position außerhalb des Bearbeitungszentrums,
- Entladen des zweiten bearbeiteten Werkstücks von dem Transportfahrzeug.

Entsprechende Be- und Entladevorgänge von Werkstücken können dabei, wie beschrieben, vermittels einer entsprechenden Handhabungseinrichtung durchgeführt werden.

Die Erfindung ist im Folgenden anhand von Ausführungsbeispielen unter Bezugnahme auf die Zeichnungen nochmals erläutert; dabei zeigt:
Fig. 1 eine Prinzipdarstellung eines Bearbeitungszentrums zur spanenden Bearbeitung eines Werkstücks gemäß einem Ausführungsbeispiel;
Fig. 2 - 4 jeweils eine Prinzipdarstellung eines Transportfahrzeugs gemäß einem Ausführungsbeispiel;
Fig. 5, 6 jeweils eine Prinzipdarstellung einer Bearbeitungsanordnung gemäß einem Ausführungsbeispiel, und
Fig. 7 eine Prinzipdarstellung eines Bearbeitungszentrums gemäß einem weiteren Ausführungsbeispiel.

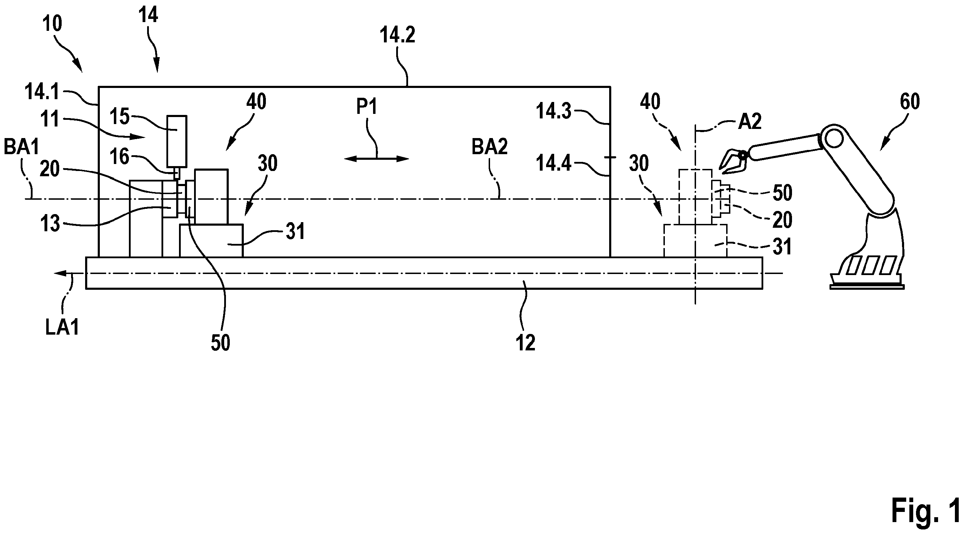

Fig. 1 zeigt eine Prinzipdarstellung eines Bearbeitungszentrums 10 zur spanenden Bearbeitung eines Werkstücks 20 gemäß einem Ausführungsbeispiel in einer Seitenansicht.

Das Bearbeitungszentrum 10 ist zur spanenden Bearbeitung eines Werkstücks 20 eingerichtet. Unter einer spanenden Bearbeitung eines Werkstücks 20 kann z. B. eine Bohrbearbeitung und/oder eine Drehbearbeitung und/oder eine Fräsbearbeitung eines Werkstücks 20 verstanden werden. Das Bearbeitungszentrum 10 kann sonach als ein Bohrzentrum, ein Drehzentrum oder ein Fräszentrum oder ein kombiniertes Bohr- und/oder Dreh- und/oder Fräszentrum ausgebildet sein.

Bei dem bzw. einem vermittels des Bearbeitungszentrums 10 spanend bearbeitbaren Werkstück 20 handelt es sich typischerweise um ein metallisches Werkstück 20, d. h. z. B. um ein Werkstück 20 aus einem auf Eisen-basierenden metallischen Werkstoff handeln. Das bzw. ein vermittels des Bearbeitungszentrums 10 spanend bearbeitbares Werkstück 20 kann eine rotationssymmetrische Form bzw. Grundform aufweisen. Das Werkstück kann sonach z. B. zumindest abschnittsweise, gegebenenfalls vollständig, scheibenförmig, ringscheibenförmig, zylinderförmig oder hohlzylinderförmig sein.

Das Bearbeitungszentrum 10 umfasst einen Bearbeitungsraum 11, in welchem die spanende Bearbeitung des Werkstücks 20 erfolgt. Der gegebenenfalls auch als Bearbeitungskammer bezeichenbare Bearbeitungsraum 11 beinhaltet ein Maschinenbett 12 bzw. Maschinengestell sowie ein Spannsystem 13, z. B. in Form eines Spannfutters oder eines Nullpunktspannsystems, zum Spannen eines spanend zu bearbeitenden Werkstücks 20.

Ersichtlich kann der Bearbeitungsraum 11 durch eine Gehäusestruktur 14 des Bearbeitungszentrums 10 begrenzt bzw. definiert sein. Die Gehäusestruktur 14 ist durch ein oder mehrere Gehäusestrukturelemente 14.1 - 14.4 gebildet. Die Gehäusestrukturelemente 14.1 - 14.4 können Wandungen bilden, welche den Bearbeitungsraum 11 begrenzen. Wenigstens ein Gehäusestrukturelement 14.1 - 14.4 kann in einem Bewegungsfreiheitsgrad, d. h. z. B. in einem Schiebe- und/oder Schwenkbewegungsfreiheitsgrad, relativ zu wenigstens einem anderen Gehäusestrukturelement 14.1 - 14.4 bewegbar gelagert sein, um in wenigstens eine Offenstellung bewegt zu werden, in welcher eine Zugangsmöglichkeit in den Bearbeitungsraum 11 geschaffen ist, und/oder um in wenigstens eine Schließstellung bewegt zu werden, in welcher keine Zugangsmöglichkeit in den Bearbeitungsraum 11 geschaffen ist.

In dem Ausführungsbeispiel gemäß Fig. 1 ist beispielhaft zumindest das Gehäusestrukturelement 14.4 in eine entsprechende Offen- und Schließstellung bewegbar gelagert. Das Gehäusestrukturelement 14.4 kann sonach eine Tür bilden, die in eine entsprechende Offen- und Schließstellung bewegbar ist.

In dem Bearbeitungsraum 11 ist eine Bearbeitungseinheit 15 angeordnet, welche ein Bearbeitungswerkzeug 16 zur spanenden Bearbeitung eines Werkstücks 20 umfasst. Bei dem Bearbeitungswerkzeug 16 kann es sich z. B. um ein Bohrwerkzeug und/oder um ein Drehwerkzeug und/oder um ein Fräswerkzeug handeln. Mithin kann die Bearbeitungseinheit 15 als eine Bohreinheit, eine Dreheinheit oder eine Fräseinheit oder eine kombinierte Bohr- und/oder Dreh- und/oder Fräseinheit ausgebildet sein. Die Bearbeitungseinheit 15 und/oder das Bearbeitungswerkzeug 15 kann, je nach konkreter Ausführung, in wenigstens einem translatorischen und/oder rotatorischen Bewegungsfreiheitsgrad, z. B. relativ zu einer horizontalen und/oder vertikalen Raumachse, bewegbar gelagert sein, z. B. um ein spanend zu bearbeitendes Werkstück 20 an verschiedenen Abschnitten und/oder in verschiedenen Ausrichtungen spanend bearbeiten zu können. Das Bearbeitungszentrum 10 kann so eine vollständige spanende Bearbeitung eines spanend zu bearbeitenden Werkstücks 20 ermöglichen.

Das Bearbeitungswerkzeug 16 ist insbesondere eingerichtet, ein spanend zu bearbeitendes Werkstück 20 in wenigstens einer bzw. relativ zu wenigstens einer Bearbeitungsachse BA1 spanend zu bearbeiten. Fig. 1 zeigt, dass die Bearbeitungsachse BA1 eine horizontal ausgerichtete Achse sein kann bzw. dass die Bearbeitungsachse BA1 parallel zu einer Längsachse LA1 des Maschinenbetts 12 bzw. Maschinengestells ausgerichtet sein kann. Für ein eine Rotations- bzw. eine Zentralachse aufweisendes, spanend zu bearbeitendes Werkstück 20 gilt typischerweise, dass dieses im Rahmen der Bearbeitung vermittels der Bearbeitungseinheit 15 typischerweise koaxial bezüglich der Bearbeitungsachse BA1 oder parallel zu der Bearbeitungsachse BA1 angeordnet ist.

Anhand von Fig. 1 ist weiter ersichtlich, dass das Maschinenbett 12 bzw. Maschinengestell in der durch die Längsachse LA1 definierten Längsrichtung verlängert ausgeführt ist, sodass sich das Maschinenbett 12 bzw. Maschinengestell nur innerhalb des Bearbeitungsraums 11, sondern auch außerhalb des Bearbeitungsraums 11 erstreckt. Ersichtlich erstreckt sich das Maschinenbett 12 bzw. Maschinengestell bis in einen Bereich außerhalb der Gehäusestruktur 14. Das Maschinenbett 12 bzw. Maschinengestell weist sonach sowohl Abschnitte innerhalb als auch außerhalb der Gehäusestruktur 14 auf.

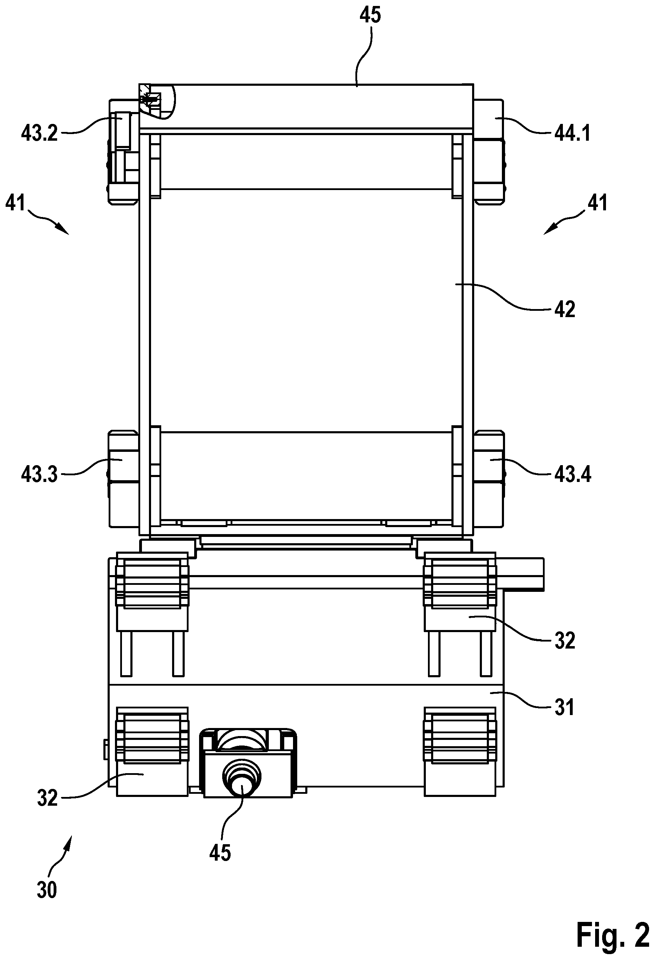

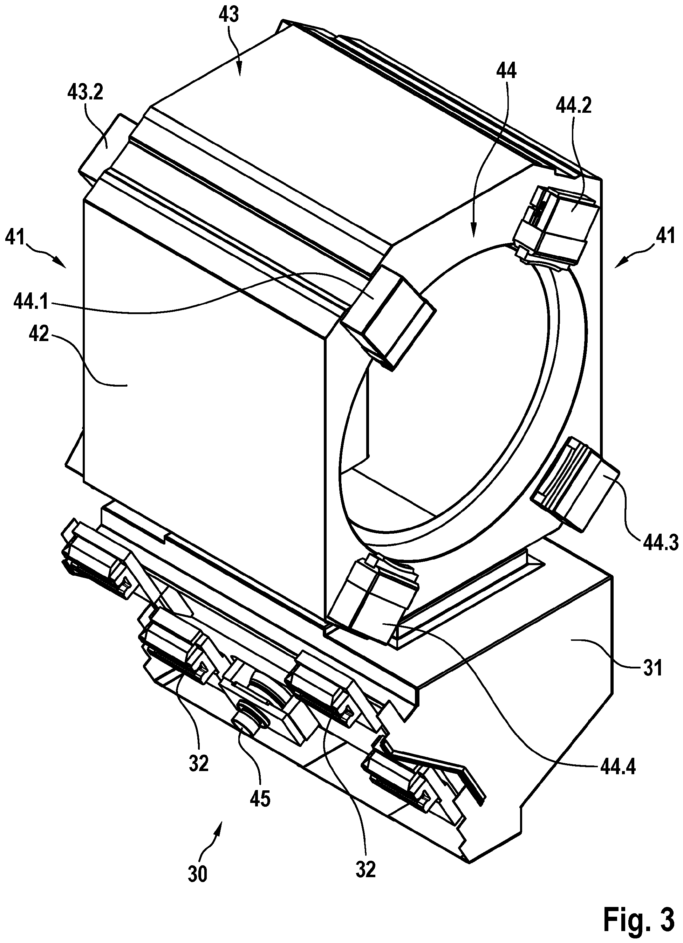

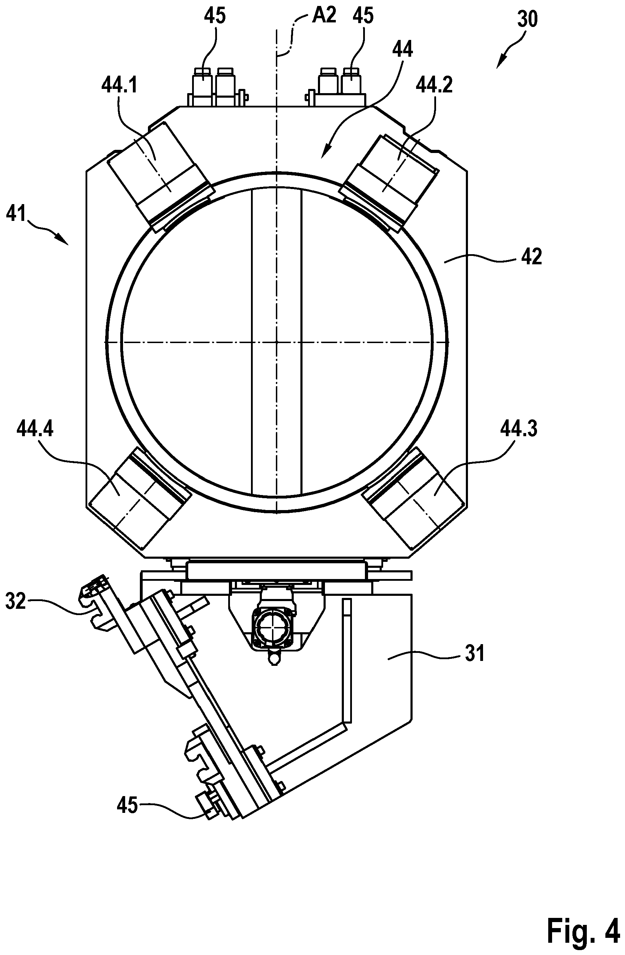

Das Bearbeitungszentrum 10 umfasst weiterhin ein Transportfahrzeug 30. Das in den Fig. 2 - 4 beispielhaft in verschiedenen Ansichten, nämlich einer Seitenansicht (Fig. 2), einer perspektivischen Ansicht (Fig. 3) und einer Frontansicht (Fig. 4) dargestellte Transportfahrzeug 30 ist mit einer Aufnahmeeinrichtung 40 zur Aufnahme wenigstens zweier Werkstücke 20 ausgebildet bzw. umfasst eine solche. Das Transportfahrzeug 30 kann sonach eine Grund(körper)struktur 31, z. B. in Form eines Chassis bzw. eines Fahrgestells, umfassen, an bzw. auf welchem die Aufnahmeeinrichtung 40 zur Aufnahme wenigstens zweier Werkstücke 20 angeordnet oder ausgebildet ist.

Die Aufnahmeeinrichtung 40 ist sonach grundsätzlich eingerichtet, wenigstens zwei Werkstücke 20 - hierbei kann es sich um unbearbeitete Werkstücke 20 und/oder um zumindest abschnittsweise bearbeitete Werkstücke 20 handeln - aufzunehmen. Dies bedeutet jedoch nicht, dass die Aufnahmeeinrichtung 40 im Betrieb des Bearbeitungszentrums 10 zwingend stets wenigstens zwei Werkstücke 20 aufnimmt, die Aufnahmeeinrichtung 40 ist hierfür lediglich grundsätzlich eingerichtet.

Unter einer Aufnahme eines jeweiligen Werkstücks 20 vermittels der Aufnahmeeinrichtung 40 kann eine unmittelbare oder mittelbare Halterung des jeweiligen Werkstücks 20 zu verstehen sein. Entsprechende zur Aufnahme wenigstens eines Werkstücks eingerichtete Wirkabschnitte der Aufnahmeeinrichtung 40 können sonach mittelbar oder unmittelbar an einem jeweiligen Werkstück 20 angreifen, um das jeweilige Werkstück 20 unmittelbar oder mittelbar zu haltern. Die Aufnahmeeinrichtung 40 kann sonach eingerichtet sein, wenigstens ein Werkstück 20 unmittelbar aufzunehmen; das jeweilige Werkstück 20 ist sonach ohne Zwischenschaltung eines das Werkstück 20 lagernden Vorrichtungssystems 50, wie z. B. eines Klemm- oder Spannsystems, vermittels der Aufnahmeeinrichtung 40 aufgenommen. Entsprechende Wirkabschnitte der Aufnahmeeinrichtung 40 können hier an dem Werkstück 20 angreifen, um dieses aufzunehmen. Alternativ oder ergänzend kann die Aufnahmeeinrichtung 40 eingerichtet sein, wenigstens ein Werkstück 20 mittelbar aufzunehmen, das jeweilige Werkstück 20 ist sonach unter Zwischenschaltung eines das Werkstück 20 lagernden Vorrichtungssystems 50, wie z. B. eines Klemm- oder Spannsystems, vermittels der Aufnahmeeinrichtung 40 aufgenommen. Entsprechende Wirkabschnitte der Aufnahmeeinrichtung 40 können hier an dem Vorrichtungssystem 50 angreifen, um dieses aufzunehmen. Ein entsprechendes Vorrichtungssystem 50 kann z. B. als ein Spannfutter, insbesondere ein Kraftspannfutter, oder ein Nullpunktspannsystem ausgebildet sein oder ein solches umfassen.

Eine Halterung eines jeweiligen Werkstücks 20 vermittels der Aufnahmeeinrichtung 40 beinhaltet typischerweise, dass ein zu bearbeitendes Werkstück 20 vermittels der Aufnahmeeinrichtung 40 so aufgenommen bzw. gehaltert ist, dass es innerhalb des Bearbeitungsraums 11 von der Aufnahmeeinrichtung 40 an das Spannsystem 13 übergeben bzw. von diesem übernommen werden kann. Gleichermaßen beinhaltet eine Halterung des jeweiligen zu bearbeitenden bzw. bearbeiteten Werkstücks 20 vermittels der Aufnahmeeinrichtung 40 typischerweise, dass ein bearbeitetes Werkstück 20 vermittels der Aufnahmeeinrichtung 40 so aufnehmbar bzw. halterbar ist, dass es innerhalb des Bearbeitungsraums 11 von dem Spannsystem 13 an die Aufnahmeeinrichtung 40 übergeben bzw. von dieser übernommen werden kann.

Grundsätzlich ebenso ist es denkbar, dass ein vermittels der Aufnahmeeinrichtung 40 aufgenommenes Werkstück 20 vermittels der Bearbeitungseinheit 15 innerhalb des Bearbeitungsraums 11 bestimmungsgemäß spanend bearbeitet werden kann; in diesem Fall muss das Werkstück 20 nicht an das Spannsystem 13 übergeben bzw. von diesem übernommen werden.

Die Aufnahmeeinrichtung 40 ist sonach eingerichtet, ein jeweiliges Werkstück 20 in einer bestimmten Ausrichtung und/oder Position aufzunehmen bzw. zu haltern, welche einer Ausrichtung und/oder Position entspricht, in welcher das jeweilige Werkstück 20 an das Spannsystem 13 übergebbar ist oder in welcher das jeweilige Werkstück 20 vermittels der Bearbeitungseinheit 15 spanend bearbeitbar bzw. spanend zu bearbeiten ist. Mithin kann die Aufnahmeeinrichtung 40 konkret z. B. eingerichtet sein, ein jeweiliges Werkstück 20 in einer Ausrichtung und/oder Position aufzunehmen, in welcher die Rotations- bzw. Zentralachse des Werkstücks 20 koaxial bezüglich der Bearbeitungsachse BA1 oder parallel zu der Bearbeitungsachse BA1 angeordnet ist. Die Aufnahme bzw. Halterung eines jeweiligen Werkstücks 20 in einer solchen Ausrichtung und/oder Position kann eine Übergabe des Werkstücks 20 an das Spannsystem 13 oder eine spanende Bearbeitung des Werkstücks 20 vermittels der Bearbeitungseinheit 15 ermöglichen.

Wie in Fig. 1 durch den Doppelpfeil P1 angedeutet ist, das Transportfahrzeug 30 nebst der Aufnahmeeinrichtung 40 in einem translatorischen Bewegungsfreiheitsgrad zwischen wenigstens einer ersten Position innerhalb des Bearbeitungszentrums 10, d. h. innerhalb des Bearbeitungsraums 11, und wenigstens einer zweiten Position außerhalb des Bearbeitungszentrums 10 bewegbar gelagert. Das Transportfahrzeug 30 lässt sich sonach entlang einer Bewegungsachse BA2 translatorisch in wenigstens eine erste Position innerhalb des Bearbeitungszentrums 10, d. h. innerhalb des Bearbeitungsraums 11, und in wenigstens eine zweite Position außerhalb des Bearbeitungszentrums 10 bewegen. Anhand von Fig. 1 ist ersichtlich, dass die Bewegungsachse BA2 des Transportfahrzeugs 30 koaxial bezüglich der Bearbeitungsachse BA1 oder parallel zu der Bearbeitungsachse BA1 angeordnet bzw. ausgerichtet sein kann.

Anhand von Fig. 1 ist ferner ersichtlich, dass sich die wenigstens eine erste Position innerhalb der Gehäusestruktur 14 befindet, wohingegen sich die wenigstens eine zweite Position außerhalb der Gehäusestruktur 14 befindet. Sofern das Bearbeitungszentrum 10 eine Gehäusestruktur 14 mit einem, wie erläutert, zwischen einer Offen- und einer Schließstellung bewegbar gelagerten Gehäusestrukturelement 14.4 umfasst, kann es erforderlich sein, das bewegbar gelagerte Gehäusestrukturelement 14.4 in die Offenstellung zu bewegen, um das Transportfahrzeug 30 von der ersten Position in die zweite Position zu bewegen oder umgekehrt.

In Fig. 1 ist das Transportfahrzeug 30 aus Gründen der Veranschaulichung sowohl in einer ersten als auch in einer zweiten Position dargestellt; dies bedeutet nicht, dass das Bearbeitungszentrum 10 zwei Transportfahrzeuge 30 aufweisen muss.

Fig. 1 zeigt, dass die wenigstens eine erste Position einer Übergabeposition oder einer Bearbeitungsposition eines vermittels der Aufnahmeeinrichtung 40 aufgenommenen bzw. gehalterten Werkstücks 20 entsprechen kann. Ein vermittels der Aufnahmeeinrichtung 40 aufgenommenes Werkstück 20 kann in der wenigstens einen ersten Position mithin so innerhalb des Bearbeitungsraums 11 angeordnet bzw. ausgerichtet sein, dass es sich in einer Übergabeposition befindet, in welcher es an das Spannsystem 13 übergebbar ist (die spanende Bearbeitung des Werkstücks 20 vermittels der Bearbeitungseinheit 15 bzw. dem Bearbeitungswerkzeug 16 erfolgt sonach im vermittels des Spannsystems 13 aufgespannten Zustand). Alternativ kann ein vermittels der Aufnahmeeinrichtung 40 aufgenommenes bzw. gehaltertes Werkstück 40 in der wenigstens einen ersten Position so innerhalb des Bearbeitungsraums 11 angeordnet bzw. ausgerichtet sein, dass es sich in einer Bearbeitungsposition befindet, in welcher es vermittels der Bearbeitungseinheit 15 bzw. dem Bearbeitungswerkzeug 16 spanend bearbeitbar ist.

Durch die Möglichkeit, dass das Transportfahrzeug 30 in wenigstens eine entsprechende zweite Position außerhalb des Bearbeitungszentrums 10 bewegbar ist, lässt sich außerhalb des Bearbeitungszentrums 10, d. h. insbesondere außerhalb des Bearbeitungsraums 11, sowohl ein besonders effizientes Aufnehmen bzw. Beladen eines spanend zu bearbeitenden Werkstücks 20 auf die Aufnahmeeinrichtung 40 als auch ein besonders effizientes Entnehmen bzw. Entladen eines spanend bearbeiteten Werkstücks 20 von der Aufnahmeeinrichtung 40 realisieren. Entsprechende Aufnahme- bzw. Belade- als auch entsprechende Entnahme- bzw. Entladevorgänge können vermittels einer dem Bearbeitungszentrum 10 zuordbaren bzw. zugeordneten Handhabungseinrichtung 60, wie z. B. einem Handhabungsroboter, durchgeführt werden.

Zu einem besonders effizientes Entnehmen bzw. Entladen von Werkstücken 20 trägt bei, dass das Transportfahrzeug 30 und/oder die Aufnahmeeinrichtung 40 in einem rotatorischen Bewegungsfreiheitsgrad um eine winklig bzw. rechtwinklig zu der Bewegungsachse BA2 des Transportfahrzeugs 30 ausgerichteten Rotationsachse A2 bewegbar gelagert ist. Das Transportfahrzeug 30 und/oder die Aufnahmeeinrichtung 40 sind sonach einzeln oder gemeinsam in einem rotatorischen Bewegungsfreiheitsgrad bewegbar gelagert. Durch entsprechende Dreh- bzw. Rotationsbewegungen des Transportfahrzeugs 30 und/oder der Aufnahmeeinrichtung 40 in dem rotatorischen Bewegungsfreiheitsgrad können Aufnahme- bzw. Entnahmevorgänge von Werkstücken 20 noch effizienter ausgeführt werden, insbesondere, weil ein auf einer Seite der Aufnahmeeinrichtung 40 aufzunehmendes, spanend zu bearbeitendes Werkstück 20 durch entsprechende Rotation des Transportfahrzeugs 30 und/oder der Aufnahmeeinrichtung 40 in eine Ausrichtung und/oder Position verbracht werden kann, in welcher es nach Bewegen des Transportfahrzeugs 30 in die erste Position, d. h. insbesondere in eine entsprechende Übergabe- oder Bearbeitungsposition, spanend bearbeitet werden kann, und/oder weil ein auf einer anderen Seite der Aufnahmeeinrichtung 40 aufgenommenes, bereits spanend bearbeitetes Werkstück 20 durch entsprechende Rotation des Transportfahrzeugs 30 und/oder der Aufnahmeeinrichtung 40 in eine Ausrichtung und/oder Position verbracht werden kann, in welcher es nach Bewegen des Transportfahrzeugs 30 in die zweite Position z. B. vermittels der Handhabungseinrichtung 60 von der Aufnahmeeinrichtung 40 entnommen werden kann.

Grundsätzlich kann durch entsprechende Rotation des Transportfahrzeugs 30 und/oder der Aufnahmeeinrichtung 40 in dem rotatorischen Bewegungsfreiheitsgrad jeder Aufnahmebereich der Aufnahmeeinrichtung 40 in eine Ausrichtung verbracht werden, in welcher er einer Werkstückhalterungseinrichtung, d. h. z. B. dem Spannsystem 13, des Bearbeitungszentrums 10 gegenüber liegend angeordnet ist. Hiervon ausgehend kann ein an dem Aufnahmebereich der Aufnahmeeinrichtung 40 aufgenommenes bzw. gehaltertes Werkstück 20 durch Bewegen des Transportfahrzeugs 30 in die erste Position in eine entsprechende Übergabe- oder Bearbeitungsposition verbracht werden.

In den in den Fig. gezeigten Ausführungsbeispielen ist beispielhaft eine Konfiguration des Transportfahrzeugs 30 gezeigt, in welcher nur die Aufnahmeeinrichtung 40 in dem rotatorischen Bewegungsfreiheitsgrad bewegbar gelagert ist. Was den rotatorischen Bewegungsfreiheitsgrad der Aufnahmeeinrichtung 40 angeht, gilt, dass dieser Rotationsbewegungen der Aufnahmeeinrichtung 40 relativ zu dem Transportfahrzeug 30, d. h. insbesondere relativ zu der Grund(körper)struktur 31 des Transportfahrzeugs 30 ermöglicht. Die Aufnahmeeinrichtung 40 kann also relativ zu der Grund(körper)struktur 31 und grundsätzlich unabhängig von dieser in dem wenigstens einen rotatorischen Bewegungsfreiheitsgrad bewegt werden. Hierfür kann das Transportfahrzeug 30, d. h. insbesondere die Grund(körper)struktur 31, eine oder mehrere Drehlagerungen (nicht gezeigt) umfassen, über welche die Aufnahmeeinrichtung 40 drehbar relativ zu der Grund(körper)struktur 31 gelagert ist.

Die Aufnahmeeinrichtung 40 kann, wie z. B. anhand der Fig. 2 - 4 ersichtlich, wenigstens zwei Aufnahmebereiche 41 für jeweils ein Werkstück 20 aufweisen, wobei wenigstens ein Aufnahmebereich 41 typischerweise so angeordnet und/oder ausgerichtet ist, dass ein Werkstück 20 so aufnehmbar oder aufgenommen ist, dass es bei Bewegen des Transportfahrzeugs 30 in die wenigstens eine erste Position in eine entsprechende Übergabe- oder Bearbeitungsposition verbringbar ist. Jeder Aufnahmebereich 41 kann wenigstens eine Ebene bzw. Fläche aufweisen bzw. definieren, an welcher sich wenigstens ein Werkstück aufnehmen und stabil haltern lässt.

Die Aufnahmebereiche 41 der Aufnahmeeinrichtung 40 sind an unterschiedlichen Seiten der Aufnahmeeinrichtung 40 angeordnet oder ausgebildet; in den in den Fig. gezeigten Ausführungsbeispielen sind die Aufnahmebereiche 41 an einander gegenüber liegenden Seiten der Aufnahmeeinrichtung 40 angeordnet oder ausgebildet.

Es wurde erwähnt, dass durch entsprechende Rotation des Transportfahrzeugs 30 und/oder der Aufnahmeeinrichtung 40 in dem rotatorischen Bewegungsfreiheitsgrad grundsätzlich jeder Aufnahmebereich 41 in eine Ausrichtung verbracht werden kann, in welcher er einer Werkstückhalterungseinrichtung, wie z. B. dem Spannsystem 13, des Bearbeitungszentrums 10 gegenüber liegend angeordnet ist. Das Transportfahrzeug 30 und/oder die Aufnahmeeinrichtung 40 können in dem rotatorischen Bewegungsfreiheitsgrad sonach in eine erste Stellung, in welcher ein erstes vermittels der Aufnahmeeinrichtung 40 aufgenommenes Werkstück 20, dieses kann an einem ersten Aufnahmebereich 41 der Aufnahmeeinrichtung 40 aufgenommen sein, einer Werkstückhalterungseinrichtung des Bearbeitungszentrums 10 gegenüber liegend angeordnet oder ausgerichtet ist, bewegbar gelagert sein. Alternativ oder ergänzend kann das Transportfahrzeug 30 und/oder die Aufnahmeeinrichtung 40 in dem rotatorischen Bewegungsfreiheitsgrad in eine zweite Stellung, in welcher ein zweites vermittels der Aufnahmeeinrichtung 40 aufgenommenes Werkstück 20, dieses kann an einem zweiten Aufnahmebereich 41 der Aufnahmeeinrichtung 40 aufgenommen sein, der Werkstückhalterungseinrichtung des Bearbeitungszentrums 10 gegenüber liegend angeordnet oder ausgerichtet ist, bewegbar gelagert sein.

Die erste Stellung des Transportfahrzeugs 30 und/oder der Aufnahmeeinrichtung 40 kann dabei eine um 180° bezüglich der Rotationsachse A2 verdrehte Stellung relativ zu der zweiten Stellung sein und umgekehrt.

Anhand der Fig. 2 - 4 ist ersichtlich, dass die Aufnahmeeinrichtung 40 einen, insbesondere käfig- oder korbartigen, Aufnahmerahmen 42 bzw. ein, insbesondere käfig- oder korbartiges, Aufnahmegestell aufweist. Der Aufnahmerahmen 42 bzw. das Aufnahmegestell kann durch ein oder mehrere Rahmen- bzw. Gestellelemente gebildet sein, welche in ein oder mehreren Raumrichtungen bzw. Raumebenen unter Ausbildung des Aufnahmerahmens 42 bzw. Aufnahmegestells miteinander verbunden sind. An dem Aufnahmerahmen 42 bzw. dem Aufnahmegestell sind entsprechende Aufnahmebereiche 41 für Werkstücke 20 angeordnet oder ausgebildet.

An dem Aufnahmerahmen 42 bzw. dem Aufnahmegestell ist eine erste Halterungseinrichtung 43 zur Halterung eines ersten Werkstücks 20 oder zur Halterung eines ein erstes Werkstück 20 lagernden Vorrichtungssystems, insbesondere eines Klemm- oder Spannsystems, sowie wenigstens eine zweite Halterungseinrichtung 44 zur Halterung eines zweiten Werkstücks 20 oder zur Halterung eines ein zweites Werkstück 20 lagernden Vorrichtungssystems, insbesondere eines Klemm- oder Spannsystems angeordnet oder ausgebildet sein. Die Halterungseinrichtung 43, 44 sind jeweiligen Aufnahmebereichen 41 der Aufnahmeeinrichtung 40 zugeordnet und demnach an unterschiedlichen, d. h. insbesondere einander gegenüber liegenden, Seiten des Aufnahmerahmens 42 bzw. des Aufnahmegestells angeordnet oder ausgebildet.

Anhand der Fig. 2 - 4 ist weiter ersichtlich, dass die erste Halterungseinrichtung 43 und die zweite Halterungseinrichtung 44 jeweils mehrere Halterungselemente 43.1 - 43.4, 44.1 - 44.4 aufweisen, welche jeweils in wenigstens eine Halterungsstellung, in welcher eine ein Werkstück 20 oder ein Werkstück 20 lagerndes Vorrichtungssystem halternde Halterungskraft ausgebildet ist, und in wenigstens eine Nichthalterungsstellung, in welcher keine ein Werkstück 20 oder ein Werkstück 20 lagerndes Vorrichtungssystem halternde Halterungskraft ausgebildet ist, überführbar sind. Jeweilige Halterungselemente 43.1 - 43.4, 44.1 - 44.4 sind sonach bewegbar an dem Aufnahmerahmen 42 angeordnet oder ausgebildet. Bei den Halterungselementen 43.1 - 43.4, 44.1 - 44.4 kann es sich sonach um die weiter oben erwähnten Wirkabschnitte der Aufnahmeeinrichtung 40 handeln.

Die Halterungselemente 43.1 - 43.4, 44.1 - 44.4 können jeweils als Klemm- oder Spannbacken, insbesondere als in der jeweiligen Halterungsstellung axial und/oder radial bezüglich der Bearbeitungsachse oder einer Zentralachse des jeweiligen Werkstücks 20 wirkende Klemm- oder Spannbacken, ausgebildet sein.

Anhand der Fig. 2 - 4 ist weiter ersichtlich, dass die Halterungselemente 43.1 - 43.4, 44.1 - 44.4 bezüglich der Bearbeitungsachse oder einer Zentralachse des jeweiligen Werkstücks 20 in Umfangsrichtung gleichmäßig verteilt angeordnet oder ausgebildet sein können.

Um das Transportfahrzeug 30 und/oder die Aufnahmeeinrichtung 40 in entsprechende translatorische und/oder rotatorische Bewegungen zu versetzen, kann das Bearbeitungszentrum 10 eine Bereitstellungseinrichtung 100 zur Bereitstellung von Energie zur Erzeugung einer das Transportfahrzeug 30 und/oder die Aufnahmeeinrichtung 40 in translatorische und/oder rotatorische Bewegungen versetzenden Antriebskraft umfassen. Dabei kann die das Transportfahrzeug 30 und/oder die Aufnahmeeinrichtung 40 in entsprechende translatorische und/oder rotatorische Bewegungen versetzende Antriebskraft über eine, z. B. motorische, Antriebseinheit des Transportfahrzeugs 30 und/oder der Aufnahmeeinrichtung 40 erzeugbar sein, welcher die Bereitstellungseinrichtung 100 das Antriebsmedium bereitstellt. Bei dem Antriebsmedium kann es sich um einen Energieträger, z. B. in Form von elektrischer Energie, hydraulischer Energie oder pneumatischer Energie, handeln. Die Antriebseinheit des Transportfahrzeugs 30 und/oder der Aufnahmeeinrichtung 40 kann daher z. B. als eine elektrische, elektromechanische, hydraulische oder pneumatische Antriebseinheit ausgebildet sein oder eine solche umfassen.

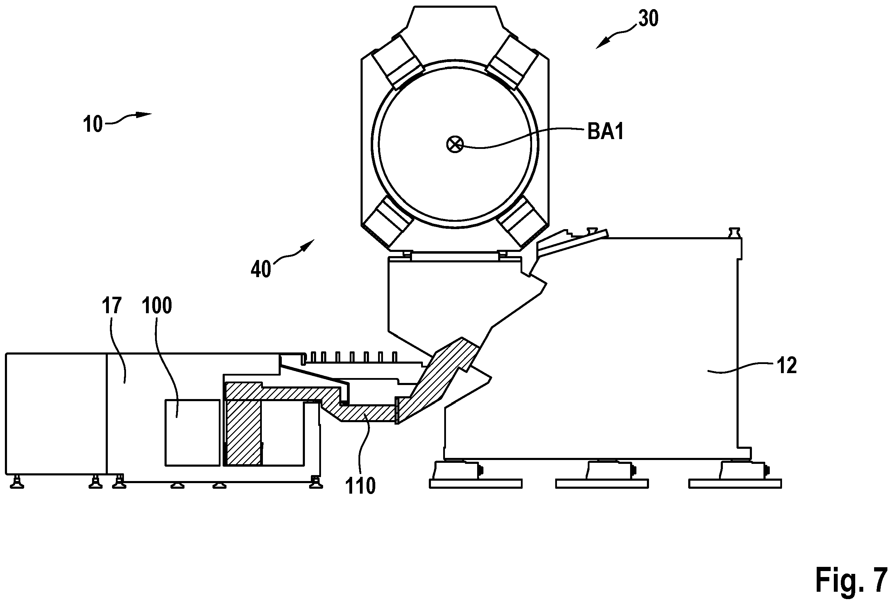

Anhand des Ausführungsbeispiels gemäß Fig. 7, welche eine teilgeschnittene axiale Ansicht des Bearbeitungszentrums 100 zeigt, ist ersichtlich, dass die Bereitstellungseinrichtung 100 in einem zu einem Maschinenbett 12 bzw. Maschinengestell separaten Teil des Bearbeitungszentrums 10 angeordnet sein kann und über einen Träger 110 für Versorgungsleitungen, z. B. in Form eines so genannten Kabelschlepps bzw. einer Energieführungskette für Versorgungsleitungen, mit dem Maschinenbett 12 bzw. Maschinengestell und weiter dem Transportfahrzeug 30 bzw. der Aufnahmeeinrichtung 40 verbunden sein kann. In dem Ausführungsbeispiel ist die Bereitstellungseinrichtung 100 beispielhaft in einem von einem Nutzer begehbaren podestartigen bzw. -förmigen Bedienbereich 17 des Bearbeitungszentrums 10 angeordnet.

Der über die Bereitstellungseinrichtung 100 bereitgestellte Energieträger kann sonach an einem Ausgang der Bereitstellungseinrichtung 100 bereitgestellt werden und vermittels in einem entsprechenden Träger 110 aufgenommenen Versorgungsleitungen an einen einem Eingang dem Transportfahrzeugs 30 und/oder der Aufnahmeeinrichtung 40 Ausgang der Bereitstellungseinrichtung 100 übertragen werden. Die Bereitstellungseinrichtung 100 kann sonach einen Ausgang, z. B. in Form eines Ausgangsanschlusses für einen jeweiligen Energieträger, aufweisen, über welchen ein Energieträger über entsprechende Versorgungsleitungen an das Transportfahrzeug 30 und/oder die Aufnahmeeinrichtung 40 übertragen werden können. Entsprechend kann das Transportfahrzeug 30 und/oder die Aufnahmeeinrichtung 40 einen Eingang, z. B. in Form eines Eingangsanschlusses für einen jeweiligen Energieträger aufweisen, über welchen dem Transportfahrzeug 30 und/oder der Aufnahmeeinrichtung 40 der Energieträger zugeführt werden kann. Ein entsprechender Ausgang und ein entsprechender Eingang können sonach, wie erwähnt, über eine oder mehrere, in einem entsprechenden Träger 110 aufgenommene Leitungsverbindungen bzw. Versorgungsleitungen, wie z. B. Kabel, Schläuche, Rohre, etc., miteinander verbunden sein.

Selbstverständlich kann alternativ oder ergänzend zu dem wenigstens einen Eingang seitens des Transportfahrzeugs 30 und/oder der Aufnahmeeinrichtung 40 auch eine Steuerschnittstelle vorhanden sein, über welche Steuerinformationen bzw. -signale, etwa zur Steuerung des Betriebs der Halterungseinrichtungen 43, 44 an das Transportfahrzeug 30 bzw. die Aufnahmeeinrichtung 40 übertragen werden können. Auch Datenkabel zur Übertragung entsprechender Steuerinformationen können in dem Träger 110 aufgenommen sein.

Die Energie zum Versetzen des Transportfahrzeugs 30 und/oder der Aufnahmeeinrichtung 40 in entsprechende translatorische und/oder rotatorische Bewegungen kann sonach über eine Bereitstellungseinrichtung 100 des Bearbeitungszentrums 10 bereitgestellt werden; das Transportfahrzeug 30 und/oder die Aufnahmeeinrichtung 40 muss sonach nicht über eine eigene und damit von dem Bearbeitungszentrum 10 unabhängige Energieversorgung verfügen, als die für den Betrieb des Bearbeitungszentrums 10 ohnehin erforderliche bzw. gegebene Energieversorgung auch für die Energieversorgung des Transportfahrzeugs 30 und/oder der Aufnahmeeinrichtung 40 genutzt werden kann. Insbesondere kann die für den Betrieb des Bearbeitungszentrums 10 ohnehin erforderliche Energieversorgung genutzt werden, um entsprechende Antriebskräfte zu erzeugen, über welche das Transportfahrzeug 30 und/oder die Aufnahmeeinrichtung 40 in entsprechende translatorische und/oder rotatorische Bewegungen versetzt werden kann. Entsprechende Antriebskräfte können konkret z. B. über motorische Antriebseinheiten des Transportfahrzeugs 30 und/oder der Aufnahmeeinrichtung 40 erzeugt werden, welche mit den von der Bereitstellungseinrichtung 100 bereitgestellten Energieträgern betrieben sind bzw. werden.

In analoger Weise kann die für die Bewegungen der Halterungselemente 43.1 -43.4, 44.1 -44.4 in jeweilige Halterungsstellung und Nichthalterungsstellungen erforderliche Energie und damit die Energieversorgung jeweiliger Halterungseinrichtungen 43, 44 über die für den Betrieb des Bearbeitungszentrums 10 ohnehin erforderliche bzw. gegebene Energieversorgung erfolgen.

Die konkrete bewegbare Lagerung des Transportfahrzeugs 30 kann in allen Ausführungsbeispielen über Lagereinrichtungen bzw. -elemente realisiert sein. Das Transportfahrzeug 30 kann sonach als ein über wenigstens ein Lagerelement, insbesondere ein Gleit-, Kugel- oder Rollenlagerelement, auf einer Transportfahrbahn, insbesondere einer Schiene, geführter Schlitten oder Wagen ausgebildet sein oder einen solchen umfassen. Grundsätzlich kommen Linearantriebe bzw. -einheiten, wie z. B. Gleitantriebe bzw. -einheiten, Spindelantriebe bzw. -einheiten, Zahnstangenantriebe bzw. -einheiten, etc., in Betracht, um das Transportfahrzeug 30 in dem translatorischen Bewegungsfreiheitsgrad bewegbar zu lagern. Mit Bezugszeichen 45 ist in den Fig. 2, 3 rein beispielhaft ein Ritzel 45 bzw. Zahnrad eines denkbaren Zahnstangenantriebs bzw. einer Zahnstangeneinheit dargestellt.

Die in den Ausführungsbeispielen beispielhaft an oder in dem Maschinenbett 12 bzw. Maschinengestell angeordnete oder ausgebildete Transportfahrbahn kann sonach den translatorischen Bewegungsfreiheitsgrad definieren, in welchem das Transportfahrzeug 30, wie beschrieben, in die wenigstens eine erste und in die wenigstens eine zweite Position bewegbar gelagert ist. Sowohl seitens des Transportfahrzeugs 30 als auch seitens der Transportfahrbahn, welche, wie erwähnt, durch das Maschinenbett 12 bzw. Maschinengestell gebildet sein kann, können, z. B. formschlüssig, zusammenwirkende Führungselemente (vgl. die in Fig. 3 4 beispielhaft dargestellten Führungselemente 32 des Transportfahrzeugs 30) vorhanden sein, welche eine stabil geführte Bewegung des Transportfahrzeugs 30 in dem translatorischen Bewegungsfreiheitsgrad ermöglichen.

Es wurde erwähnt, dass Werkstücke 20 vermittels Handhabungseinrichtungen 60 auf die Aufnahmeeinrichtung 40 aufgenommen und/oder von der Aufnahmeeinrichtung 40 entnommen werden können. Das Bearbeitungszentrum 10 kann sonach wenigstens eine, insbesondere durch einen Industrieroboter implementierte oder einen solchen umfassende, Handhabungseinrichtung 60 umfassen, welche zum Beladen des Transportfahrzeugs 30, insbesondere des in eine Beladeposition außerhalb des Bearbeitungszentrums 10 bewegten Transportfahrzeugs 30, mit wenigstens einem Werkstück 20 und/oder zum Entladen wenigstens eines Werkstücks 20 von dem Transportfahrzeug 30, insbesondere von dem in eine Entladeposition außerhalb des Bearbeitungszentrums 10 bewegten Transportfahrzeugs 30, eingerichtet ist.

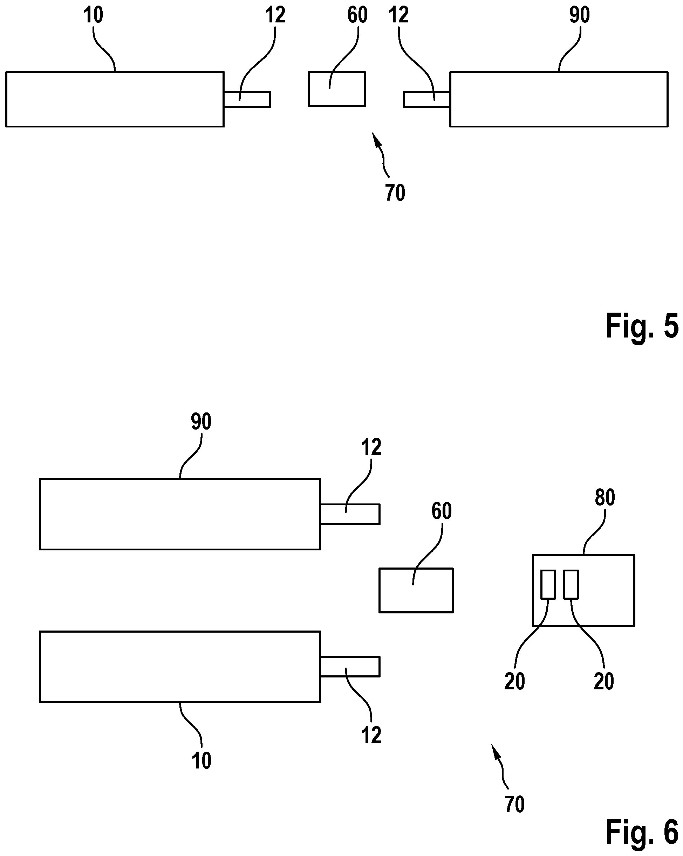

Die wenigstens eine Handhabungseinrichtung 60 kann insbesondere zur Übergabe eines Werkstücks 20, insbesondere eines noch nicht bearbeiteten Werkstücks 20 oder eines zumindest abschnittsweise bearbeiteten Werkstücks 20, von dem Bearbeitungszentrum 10 an eine Prozessstation, wie z. B. eine Rüststation oder eine Umrüststation, und/oder an ein weiteres Bearbeitungszentrum eingerichtet sein (vgl. Fig. 5, 6).

Das Bearbeitungszentrum 10 kann eine hardware- und/oder softwaremäßig implementiert Steuereinrichtung (nicht gezeigt) umfassen, welche zur Steuerung des Betriebs des Bearbeitungszentrums 10 eingerichtet ist. Die Steuereinrichtung ist insbesondere eingerichtet, entsprechende Bewegungen des Transportfahrzeugs 30 und/oder der Aufnahmeeinrichtung 40 sowie entsprechende Bewegungen der Halterungseinrichtungselemente 43.1 - 43.4, 44.1 - 44.4 koordiniert zu steuern, um, insbesondere automatisierbar bzw. automatisiert, z. B. ein bestimmungsgemäßes Beladen der Aufnahmeeinrichtung 40 mit wenigstens einem spanend zu bearbeitenden Werkstück 20, ein bestimmungsgemäßes Übergeben eines spanend zu bearbeitenden Werkstücks 20 von der Aufnahmeeinrichtung 40 an das Spannsystem 13, ein bestimmungsgemäßes spanendes Bearbeiten wenigstens eines Werkstücks 20 vermittels der Bearbeitungseinheit 15, ein bestimmungsgemäßes Übergeben eines spanend bearbeiteten Werkstücks 20 an die Aufnahmeeinrichtung 40 sowie ein bestimmungsgemäßes Entladen wenigstens eines spanend bearbeiteten Werkstücks 20 von der Aufnahmeeinrichtung 40 zu ermöglichen.

In den Fig. 5, 6 sind beispielhaft zwei Bearbeitungsanordnungen 70 zur spanenden Bearbeitung wenigstens eines Werkstücks 20 in Aufsichten dargestellt. Ersichtlich umfassen die Bearbeitungsanordnungen 70 jeweils wenigstens ein erstes Bearbeitungszentrum 10, wenigstens eine Prozessstation 80, wie z. B. eine Rüststation oder eine Umrüststation, und/oder wenigstens ein weiteres Bearbeitungszentrum 90 sowie wenigstens eine Handhabungseinrichtung 60. Die wenigstens eine Handhabungseinrichtung 60 ist insbesondere zur Übergabe eines Werkstücks 20, insbesondere eines noch nicht bearbeiteten Werkstücks 20 oder eines zumindest abschnittsweise bearbeiteten Werkstücks 20, von dem ersten Bearbeitungszentrum 10 an das wenigstens eine weitere Bearbeitungszentrum 90 und/oder an die wenigstens eine Prozessstation 80, oder umgekehrt, eingerichtet.

Die Bearbeitungsanordnung 70 kann im Hinblick auf die Anordnung der dieser zugehörigen Einheiten, d. h. des wenigstens einen ersten Bearbeitungszentrums 10, des wenigstens einen weiteren Bearbeitungszentrums 90 und/oder der wenigstens einen Prozessstation 80, verschiedenartig konfigurierbar bzw. konfiguriert sein. Beispielsweise kann, wie Fig. 5 zeigt, das erste Bearbeitungszentrum 10 und das wenigstens eine weitere Bearbeitungszentrum 90 in Reihe geschaltet angeordnet sein, oder, wie Fig. 6 zeigt, das erste Bearbeitungszentrum 10, das wenigstens eine weitere Bearbeitungszentrum 90 und die Prozessstation 80 winklig zueinander, insbesondere parallel zueinander, geschaltet angeordnet sein. Die wenigstens eine Handhabungseinrichtung 60 kann in allen Fällen zwischen den Einheiten der jeweiligen Bearbeitungsanordnung 70 angeordnet sein, z. B. um eine Übergabe eines Werkstücks 20 von einem ersten Bearbeitungszentrum 10 in ein weiteres Bearbeitungszentrum 90 und/oder in eine Prozessstation 80 zu ermöglichen.

Mit dem in den Fig. gezeigten Bearbeitungszentrum 10 bzw. den Bearbeitungsanordnungen 70 lässt sich ein Verfahren zum Betrieb wenigstens eines Bearbeitungszentrums 10 implementieren. Das Verfahren umfasst zumindest die folgenden Schritte: Bewegen des Transportfahrzeugs 30, welches wenigstens ein zu bearbeitendes Werkstück 20 aufgenommen hat, in eine Position innerhalb des Bearbeitungsraums 11 eines Bearbeitungszentrums 10 (erste Position), insbesondere in eine entsprechende Übergabe- oder Bearbeitungsposition, und Bewegen des Transportfahrzeugs 30, welches wenigstens ein in dem Bearbeitungsraum 11 des Bearbeitungszentrums 10 bearbeitetes Werkstück 20 aufgenommen hat, in eine Position außerhalb des Bearbeitungsraums 11 (zweite Position).

Das Verfahren kann ferner einen Schritt des Bewegens des Transportfahrzeugs 30 oder der Aufnahmeeinrichtung 40 in dem rotatorischen Bewegungsfreiheitsgrad außerhalb oder innerhalb des Bearbeitungsraums 11 umfassen. Derart können z. B. Be- und Entladevorgänge der Aufnahmeeinrichtung 40 mit wenigstens einem Werkstück 20 realisiert werden.

In einer konkreten Ausführungsform kann das Verfahren die folgenden Schritte umfassen:
- Bewegen des Transportfahrzeugs 30, welches wenigstens ein zu bearbeitendes Werkstück 20 aufgenommen hat, in eine Position, insbesondere in eine Übergabe- oder Bearbeitungsposition, in welcher ein Bearbeiten des Werkstücks 20 vermittels der Bearbeitungseinheit 15 möglich ist, innerhalb des Bearbeitungsraums 11,
- Übergeben des wenigstens einen Werkstücks 20 von der Aufnahmeeinrichtung 40 an ein Spannsystem 13 des Bearbeitungszentrums 10,
- Bearbeiten des wenigstens einen vermittels des Spannsystems 13 gespannten Werkstücks 20 innerhalb des Bearbeitungsraums 11 vermittels der Bearbeitungseinheit 15,
- Übergeben des wenigstens einen bearbeiteten Werkstücks 20 von dem Spannsystem 13 des Bearbeitungszentrums an die Aufnahmeeinrichtung 40,
- Bewegen des Transportfahrzeugs 30, welches das wenigstens eine bearbeitete Werkstück 20 aufgenommen hat, in eine Position außerhalb des Bearbeitungszentrums 10,
- Entladen des wenigstens einen bearbeiteten Werkstücks 20 von dem Transportfahrzeug 30.

Das Verfahren kann ferner die folgenden Schritte umfassen:
- Drehen des Transportfahrzeugs 30 und/oder der Aufnahmeeinrichtung 40 in dem rotatorischen Bewegungsfreiheitsgrad,
- Beladen der Aufnahmeeinrichtung 40 mit einem zweiten zu bearbeitenden Werkstück 20,
- Bewegen des Transportfahrzeugs 30, welches das zweite zu bearbeitende Werkstück 20 aufgenommen hat, in eine Position innerhalb des Bearbeitungsraums 11, insbesondere in eine Übergabe- oder Bearbeitungsposition, in welcher ein Bearbeiten des zweiten Werkstücks 20 vermittels der Bearbeitungseinheit 15 möglich ist,
- Übergeben des wenigstens einen zweiten zu bearbeitenden Werkstücks 20 von der Aufnahmeeinrichtung 40 an ein Spannsystem 13 des Bearbeitungszentrums 10,
- Bearbeiten des wenigstens einen, vermittels des Spannsystems 13 gespannten zweiten Werkstücks 20 innerhalb des Bearbeitungsraums 11 vermittels der Bearbeitungseinheit 15,
- Übergeben des wenigstens einen zweiten bearbeiteten Werkstücks 20 von dem Spannsystem 13 des Bearbeitungszentrums an die Aufnahmeeinrichtung 40,
- Bewegen des Transportfahrzeugs 30, welches das wenigstens eine zweite bearbeitete Werkstück 20 aufgenommen hat, in eine Position außerhalb des Bearbeitungszentrums 10,
- Entladen des wenigstens einen zweiten bearbeiteten Werkstücks 20 von dem Transportfahrzeug 30.

In einer weiteren konkreten Ausführungsform kann das Verfahren die folgenden Schritte umfassen:
- Bewegen des Transportfahrzeugs 30, welches zwei mechanisch zu bearbeitende Werkstücke 20 aufgenommen hat, in eine Position, insbesondere in eine Übergabe- oder Bearbeitungsposition, in welcher ein Bearbeiten eines ersten Werkstücks 20 vermittels der Bearbeitungseinheit 15 möglich ist, innerhalb des Bearbeitungsraums 11,
- Übergeben des ersten zu bearbeitenden Werkstücks 20 von der Aufnahmeeinrichtung 40 an ein Spannsystem 13 des Bearbeitungszentrums 10 in dem Bearbeitungsraum 11,
- Bearbeiten des vermittels des Spannsystems 13 gespannten ersten Werkstücks 20 vermittels der Bearbeitungseinheit 15,
- Übergeben des ersten bearbeiteten Werkstücks 20 von dem Spannsystem 13 des Bearbeitungszentrums an die Aufnahmeeinrichtung 40,
- Bewegen des Transportfahrzeugs 30, welches das erste bearbeitete Werkstück 20 und das zweite (noch unbearbeitete) Werkstück 20 aufgenommen hat, in eine Position außerhalb des Bearbeitungszentrums 10,
- Entladen des ersten bearbeiteten Werkstücks 20 von dem Transportfahrzeug 30,
- gegebenenfalls Beladen der Aufnahmeeinrichtung 40 mit einem dritten spanend zu bearbeitenden Werkstück 40 an einem freien Aufnahmebereich der Aufnahmeeinrichtung 40, z. B. an welchem vormals das erste Werkstück 20 aufgenommen war,
- Drehen des Transportfahrzeugs 30 und/oder der Aufnahmeeinrichtung 40 in dem rotatorischen Bewegungsfreiheitsgrad derart, dass das zweite Werkstück 20 in eine Stellung, in welcher das zweite Werkstück 20 einer Werkstückhalterungseinrichtung, wie z. B. dem Spannsystem 13, des Bearbeitungszentrums 10 gegenüber liegend angeordnet oder ausgerichtet ist, verbracht wird,
- Bewegen des Transportfahrzeugs 30 in eine Position, insbesondere in eine Übergabe- oder Bearbeitungsposition, innerhalb des Bearbeitungsraums 11, in welcher ein Bearbeiten des zweiten Werkstücks 20 vermittels der Bearbeitungseinheit 15 möglich ist,
- Übergeben des zweiten zu bearbeitenden Werkstücks 20 von der Aufnahmeeinrichtung 40 an das Spannsystem 13 des Bearbeitungszentrums 10,
- Bearbeiten des vermittels des Spannsystems 13 gespannten zweiten Werkstücks 20 vermittels der Bearbeitungseinheit 15,
- Übergeben des zweiten bearbeiteten Werkstücks 20 von dem Spannsystem 13 an die Aufnahmeeinrichtung 40,
- Bewegen des Transportfahrzeugs 30, welches das zweite bearbeitete Werkstück 20 und gegebenenfalls das dritte Werkstück 20 aufgenommen hat, in eine Position außerhalb des Bearbeitungszentrums 10,
- Entladen des zweiten bearbeiteten Werkstücks 20 von dem Transportfahrzeug 30.

Entsprechende Be- und Entladevorgänge von Werkstücken 20 können dabei, wie beschrieben, insbesondere automatisierbar bzw. automatisiert, vermittels einer entsprechenden Handhabungseinrichtung 60 durchgeführt werden.

Einzelne, mehrere oder alle im Zusammenhang mit einem bestimmten Ausführungsbeispiel offenbarten Merkmale können mit einzelnen, mehreren oder allen Merkmalen wenigstens eines anderen Ausführungsbeispiels kombiniert werden.

## Patentansprüche

1. Bearbeitungszentrum zur spanenden Bearbeitung eines Werkstücks, umfassend eine in einem Bearbeitungsraum des Bearbeitungszentrums angeordnete Bearbeitungseinheit, welche ein Bearbeitungswerkzeug zur spanenden Bearbeitung eines Werkstücks relativ zu einer Bearbeitungsachse umfasst, wobei das Bearbeitungszentrum umfasst:
ein Transportfahrzeug mit einer Aufnahmeeinrichtung zur Aufnahme wenigstens zweier Werkstücke, insbesondere unbearbeiteter oder zumindest abschnittsweise bearbeiteter Werkstücke, wobei
das Transportfahrzeug in einem translatorischen Bewegungsfreiheitsgrad zumindest zwischen einer ersten Position innerhalb des Bearbeitungszentrums, insbesondere innerhalb des Bearbeitungsraums, und einer zweiten Position außerhalb des Bearbeitungszentrums bewegbar gelagert ist, und wobei
das Transportfahrzeug und/oder die Aufnahmeeinrichtung in einem rotatorischen Bewegungsfreiheitsgrad bewegbar gelagert ist.

2. Bearbeitungszentrum nach Anspruch 1, wobei das Transportfahrzeug und/oder die Aufnahmeeinrichtung in einem rotatorischen Bewegungsfreiheitsgrad zwischen einer ersten Stellung, in welcher ein erstes vermittels der Aufnahmeeinrichtung aufgenommenes Werkstück einer Werkstückhalterungseinrichtung des Bearbeitungszentrums gegenüber liegend angeordnet oder ausgerichtet ist, und einer zweiten Stellung, in welcher ein zweites vermittels der Aufnahmeeinrichtung aufgenommenes Werkstück der Werkstückhalterungseinrichtung des Bearbeitungszentrums gegenüber liegend angeordnet oder ausgerichtet ist, bewegbar gelagert ist.

3. Bearbeitungszentrum nach Anspruch 2, wobei die erste Stellung eine, insbesondere um 180° verdrehte Stellung relativ zu der zweiten Stellung ist.

4. Bearbeitungszentrum nach einem der vorhergehenden Ansprüche, wobei die Aufnahmeeinrichtung einen, insbesondere käfig- oder korbartigen, Aufnahmerahmen aufweist, an welchem angeordnet oder ausgebildet ist:
eine erste Halterungseinrichtung zur Halterung eines ersten Werkstücks oder zur Halterung eines ein erstes Werkstück lagernden Vorrichtungssystems, insbesondere eines Klemm- oder Spannsystems, und
eine zweite Halterungseinrichtung zur Halterung eines zweiten Werkstücks oder zur Halterung eines ein zweites Werkstück lagernden Vorrichtungssystems, insbesondere eines Klemm- oder Spannsystems.

5. Bearbeitungszentrum nach Anspruch 4, wobei die erste Halterungseinrichtung ein oder mehrere erste Halterungselemente aufweist, welche in wenigstens eine Halterungsstellung, in welcher eine ein erstes Werkstück oder ein erstes Werkstück lagerndes Vorrichtungssystem halternde Halterungskraft ausgebildet ist, und in wenigstens eine Nichthalterungsstellung, in welcher keine ein erstes Werkstück oder ein erstes Werkstück lagerndes Vorrichtungssystem halternde Halterungskraft ausgebildet ist, überführbar sind, und/oder wobei die zweite Halterungseinrichtung ein oder mehrere zweite Halterungselemente aufweist, welche in wenigstens eine Halterungsstellung, in welcher eine ein zweites Werkstück oder ein zweites Werkstück lagerndes Vorrichtungssystem halternde Halterungskraft ausgebildet ist, und in wenigstens eine Nichthalterungsstellung, in welcher keine ein zweites Werkstück oder ein zweites Werkstück lagerndes Vorrichtungssystem halternde Halterungskraft ausgebildet ist, überführbar sind.

6. Bearbeitungszentrum nach Anspruch 5, wobei die ein oder mehreren ersten Halterungselemente als Klemm- oder Spannbacken, insbesondere als in der jeweiligen Halterungsstellung axial und/oder radial bezüglich der Bearbeitungsachse wirkende Klemm- oder Spannbacken, ausgebildet sind, und/oder
die ein oder mehreren zweiten Halterungselemente als Klemm- oder Spannbacken ausgebildet sind als Klemm- oder Spannbacken, insbesondere als in der jeweiligen Halterungsstellung axial und/oder radial bezüglich der Bearbeitungsachse wirkende Klemm- oder Spannbacken, ausgebildet sind.

7. Bearbeitungszentrum nach Anspruch 5 oder 6, wobei die ein oder mehreren ersten Halterungselemente und/oder die ein oder mehreren zweiten Halterungselemente bezüglich der Bearbeitungsachse umfangsmäßig verteilt angeordnet oder ausgebildet sind.

8. Bearbeitungszentrum nach einem der vorhergehenden Ansprüche, umfassend eine Antriebseinheit zur Erzeugung einer das Transportfahrzeug und/oder die Aufnahmeeinrichtung in eine Bewegung versetzenden Antriebskraft, wobei die das Transportfahrzeug und/oder die Aufnahmeeinrichtung in eine Bewegung versetzende Antriebskraft über eine der Antriebseinheit von einer Bereitstellungseinrichtung des Bearbeitungszentrums bereitgestelltes Antriebsmedium erzeugbar ist.

9. Bearbeitungszentrum nach Anspruch 8, wobei das Antriebsmedium über einen mit einem Eingang des Transportfahrzeugs kommunizierenden Ausgang des Bearbeitungszentrums bereitstellbar oder bereitgestellt ist.

10. Bearbeitungszentrum nach Anspruch 8 oder 9, wobei die Antriebseinheit als eine elektrische, elektromechanische, hydraulische oder pneumatische Antriebseinheit ausgebildet ist oder eine solche umfasst.

11. Bearbeitungszentrum nach einem der vorgehenden Ansprüche, wobei das Transportfahrzeug als ein über wenigstens eine Lagereinrichtung oder wenigstens ein Lagerelement, insbesondere ein Gleit-, Kugel- oder Rollenlagerelement, auf einer Transportfahrbahn, insbesondere einer Schiene, geführter Schlitten oder Wagen ausgebildet ist oder einen solchen umfasst.

12. Bearbeitungszentrum nach einem der vorhergehenden Ansprüche, wobei der erste Bewegungsfreiheitsgrad eine Bewegung entlang der Bearbeitungsachse oder einer hierzu parallelen Achse umfasst.

13. Bearbeitungszentrum nach einem der vorhergehenden Ansprüche, ferner umfassend eine, insbesondere durch einen Industrieroboter implementierte oder einen solchen umfassende, Handhabungseinrichtung zum Beladen des Transportfahrzeugs, insbesondere des in eine Beladeposition außerhalb des Bearbeitungszentrums bewegten Transportfahrzeugs, mit wenigstens einem Werkstück und/oder zum Entladen wenigstens eines Werkstücks von dem Transportfahrzeug, insbesondere von dem in eine Entladeposition außerhalb des Bearbeitungszentrums bewegten Transportfahrzeugs.

14. Bearbeitungsanordnung zur spanenden Bearbeitung eines Werkstücks, umfassend:
- ein erstes Bearbeitungszentrum, welches ein Bearbeitungszentrum nach einem der vorhergehenden Ansprüche ist,
- wenigstens ein weiteres Bearbeitungszentrum zur spanenden Bearbeitung eines Werkstücks und/oder
- wenigstens eine Prozessstation, insbesondere eine Rüststation und/oder eine Umrüststation, sowie
- wenigstens eine Handhabungseinrichtung.

15. Verfahren zum Betrieb wenigstens eines Bearbeitungszentrums nach einem der Ansprüche 1 bis 13, umfassend die folgenden Schritte:
- Bewegen des Transportfahrzeugs, welches wenigstens ein zu bearbeitendes Werkstück aufgenommen hat, in eine Position innerhalb des Bearbeitungsraums, insbesondere in eine Übergabe- oder Bearbeitungsposition, in welcher ein Bearbeiten des Werkstücks vermittels der Bearbeitungseinheit möglich ist,
- Bewegen des Transportfahrzeugs, welches wenigstens ein in dem Bearbeitungsraum des Bearbeitungszentrums bearbeitetes Werkstück aufgenommen hat, in eine Position außerhalb des Bearbeitungsraums.
